# EUROPEAN PATENT APPLICATION

(11) **EP 4 261 804 A1**
(43) Date of publication of application: **18.10.2023**
(21) Application number: 21902936.0
(22) Date of filing: 26.08.2021
(51) Int. Cl.: G08G 1/09, B60W 60/00

(54) **INFORMATION PROCESSING METHOD AND INFORMATION PROCESSING SYSTEM**

(30) Priority: 10.12.2020 JP 2020204691
(71) Applicant: Panasonic Intellectual Property Corporation of America, Torrance, CA 90504 (US)
(72) Inventor: ANABUKI, Motoshi, Osaka-shi, Osaka 540-6207 (JP)
(74) Representative: Novagraaf International SA
(86) International application number: PCT/JP2021/031333
(87) International publication number: WO 2022/123831

(57) **Abstract**

This information processing method causes a computer to execute: obtaining, via communication, information regarding the state of a mobile body capable of autonomous driving and manually controlled remote driving (S20); determining a first operation control, which is included in operation control of the mobile body and involves a manually controlled remote operation, based on the information regarding the state of the mobile body when the mobile body is switched from the autonomous driving to the manually controlled remote driving (No in S30); and causing the mobile body to operate based on the manually controlled remote operation corresponding to the first operation control, and causing the mobile body to perform a second operation control different from the first operation control (S60).

## Description

### [Technical Field]

The present disclosure relates to information processing methods and information processing systems.

### [Background Art]

In recent years, studies have been conducted on remote operation systems that allow a remote operator at a remote location to indirectly operate a vehicle capable of autonomous driving, as necessary, using wireless communication such as a wireless local area network (wireless LAN) and a mobile phone network. For example, when the vehicle is forced into a situation where the vehicle cannot travel autonomously, the remote operator controls the travel of the vehicle from the remote location by transmitting, to the vehicle, a control signal related to the travel of the vehicle.

For example, Patent Literature (PTL) 1 discloses a semi-autonomous driving system (remote operation system) that changes assignment of travel determination between an autonomous driving function and a remote operation on the basis of a travel environment condition and a communication environment condition.

### [Citation List]

### [Patent Literature]

[PTL 1] Japanese Patent No. 5506423

### [Summary of Invention]

### [Technical Problem]

However, in a remote operation system such as that disclosed in PTL 1, it is difficult to reduce the burden the remote operation imposes on the remote operator. For example, when it is determined that the remote operator performs a remote operation, the remote operator is supposed to perform the entire actual operation on a vehicle. Therefore, with the technique disclosed in PTL 1, it is difficult to reduce the burden to be imposed by the remote operation itself.

Thus, the present disclosure provides an information processing method and an information processing device that allow for a reduced burden on a remote operator who operates a mobile body from a remote location while ensuring the safety of the mobile body.

### [Solution to Problem]

An information processing method according to one aspect of the present disclosure is an information processing method for causing a computer to execute: obtaining information regarding a state of a mobile body capable of autonomous driving and manually controlled remote driving; determining a first operation control based on information regarding the state of the mobile body when the mobile body is switched from the autonomous driving to the manually controlled remote driving, the first operation control being included in operation control of the mobile body and involving a manually controlled remote operation; and causing the mobile body to operate based on the manually controlled remote operation corresponding to the first operation control, and causing the mobile body to perform a second operation control different from the first operation control.

An information processing system according to one aspect of the present disclosure includes: an obtainer that obtains information regarding a state of a mobile body capable of autonomous driving and manually controlled remote driving; a determiner that determines a first operation control based on the information regarding the state of the mobile body when the mobile body is switched from the autonomous driving to the manually controlled remote driving, the first operation control being included in operation control of the mobile body and involving a manually controlled remote operation; and a switch instruction unit that causes the mobile body to operate based on the manually controlled remote operation corresponding to the first operation control, and causes the mobile body to perform a second operation control different from the first operation control.

### [Advantageous Effects of Invention]

With the information processing method, etc., according to one aspect of the present disclosure, it is possible to reduce the burden on a remote operator who operates a mobile body from a remote location while ensuring the safety of the mobile body.

### [Brief Description of Drawings]

[FIG. 1]

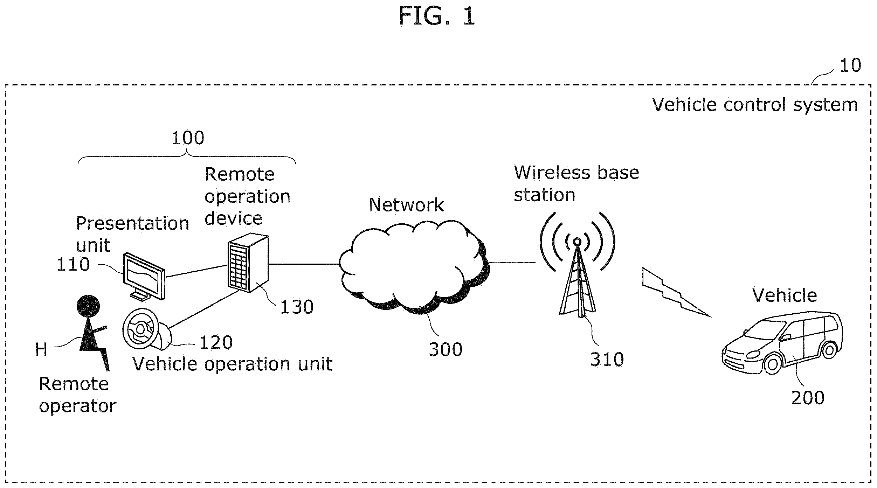

   FIG. 1 is a diagram illustrating the outline configuration of a vehicle control system according to an embodiment.
[FIG. 2]

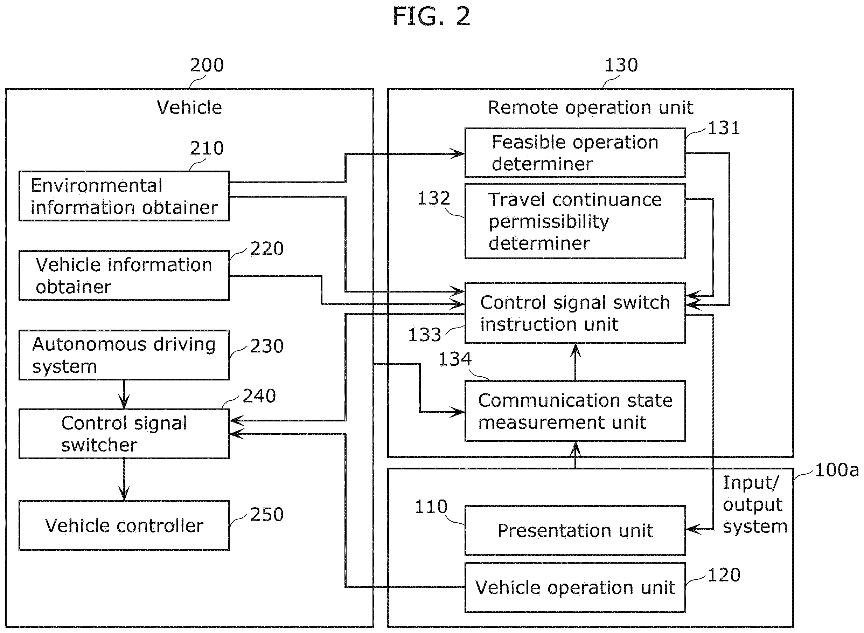

   FIG. 2 is a block diagram illustrating the functional configuration of a vehicle control system according to an embodiment.
[FIG. 3]

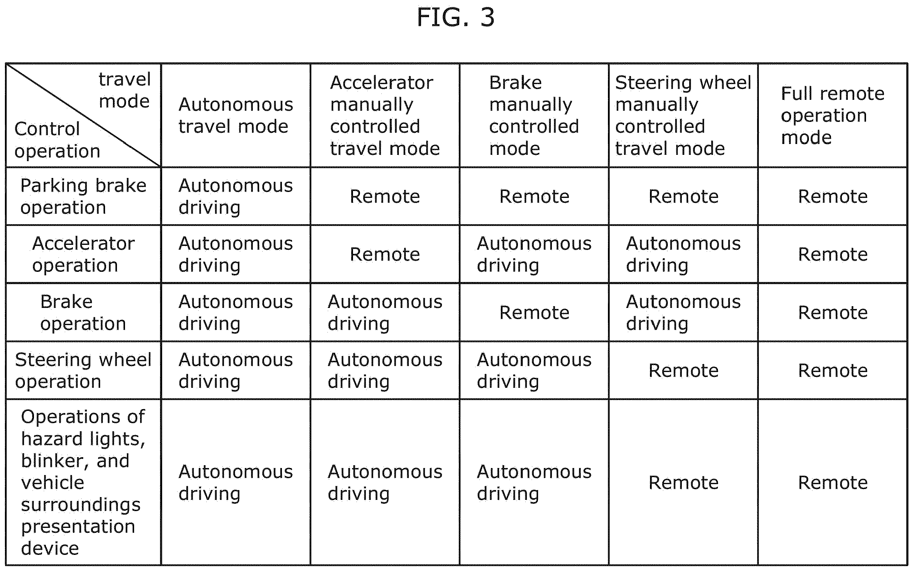

   FIG. 3 is a diagram illustrating one example of assignment of vehicle control in travel modes.
[FIG. 4]

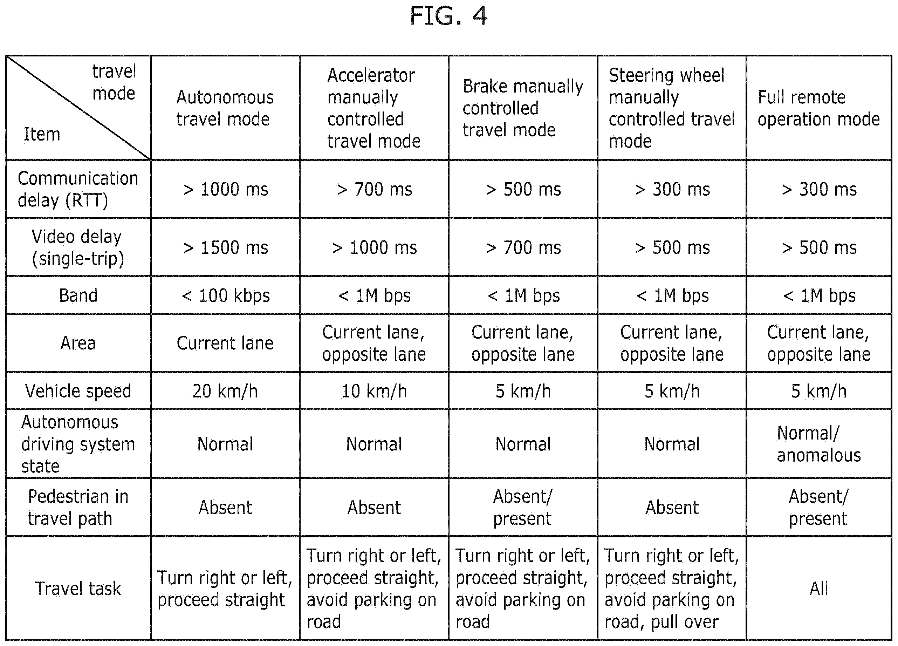

   FIG. 4 is a diagram illustrating one example of travel permitting conditions in travel modes.
[FIG. 5]

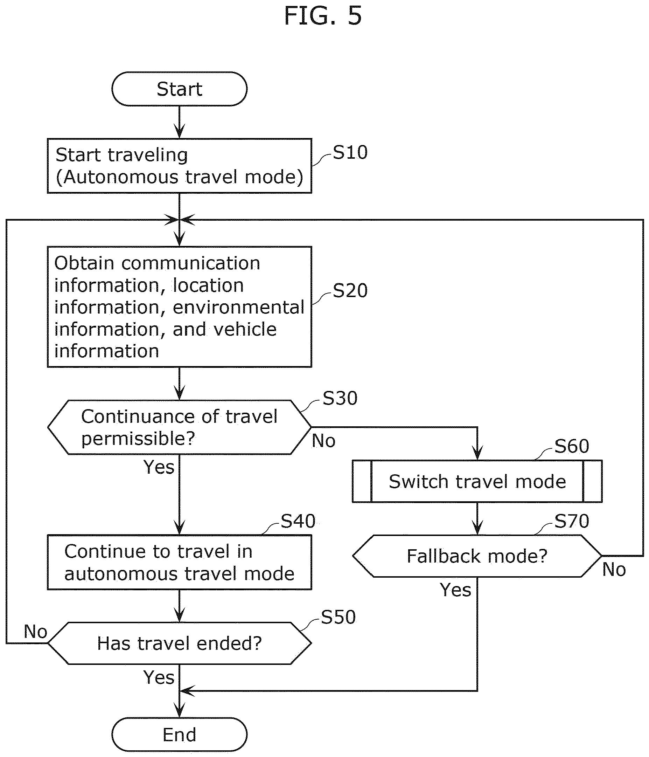

   FIG. 5 is a flowchart illustrating the operation of a vehicle control system according to an embodiment.
[FIG. 6]

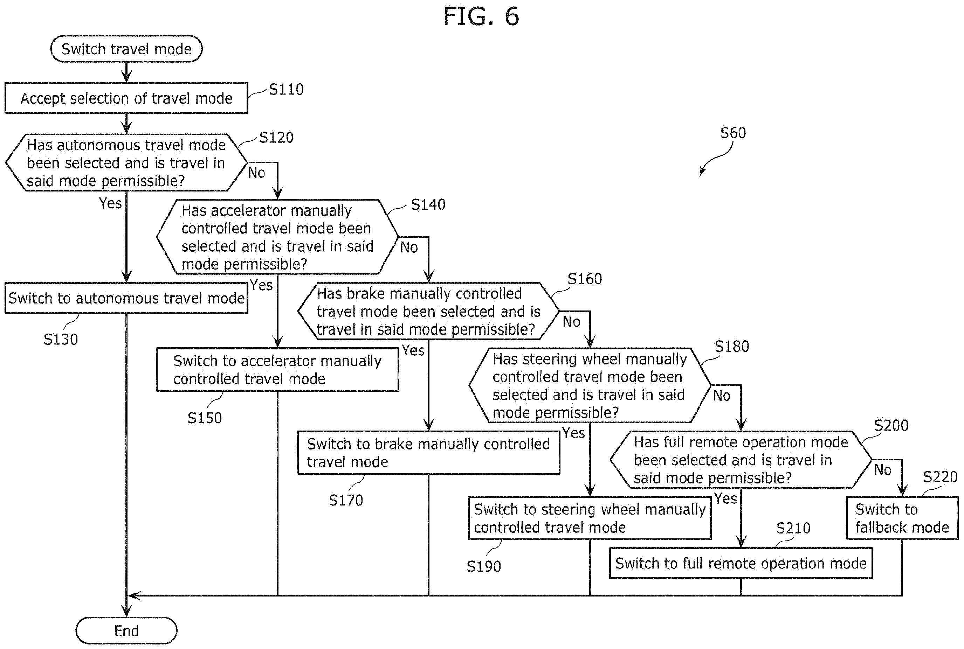

   FIG. 6 is a flowchart illustrating details of the process of switching between travel modes illustrated in FIG. 5.
[FIG. 7]

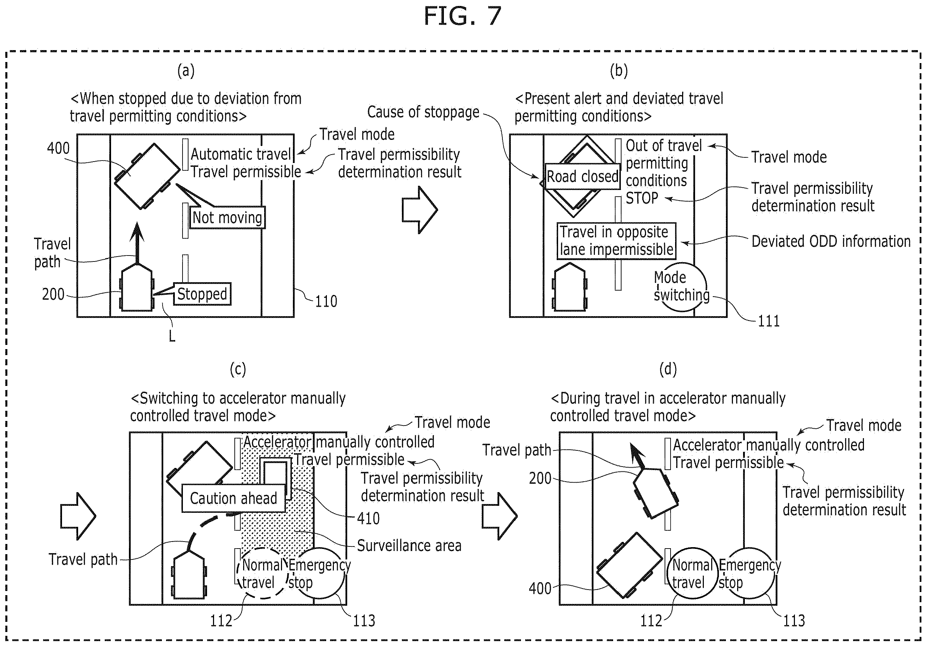

   FIG. 7 is a schematic diagram for describing switching over to an accelerator manually controlled travel mode.
[FIG. 8]

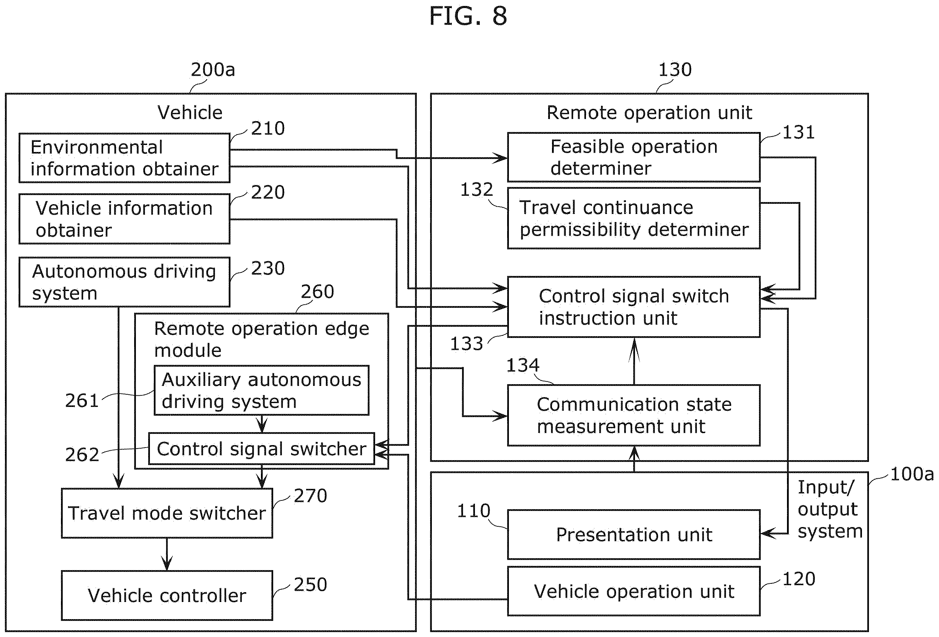

   FIG. 8 is a block diagram illustrating the functional configuration of a vehicle control system according to a variation of an embodiment.

### [Description of Embodiments]

### (Underlying Knowledge Forming Basis of the Present Disclosure)

For example, when a vehicle is forced into a situation where the vehicle cannot travel autonomously, a remote operator controls the travel of the vehicle from a remote location by transmitting, to the vehicle, a control signal related to the travel of the vehicle. At this time, the remote operator may need to perform the remote operation under circumstances where there is a communication delay or his or her field of view, etc., is limited, for example, meaning that maneuverability may be low. For example, depending on a communication state, a vehicle state, the location of a vehicle, a movement task, a state of surroundings of the vehicle, or the like, the remote operator may not be able to perform the remote operation safely and efficiently. The communication state is, for example, a communication delay or band. The vehicle state is, for example, a malfunction or a speed. The movement task is, for example, turning right or left or parking. The state of the surroundings of the vehicle is, for example, the congestion degree or the positional relationship with a nearby vehicle. This means that with the conventional techniques, the remote operation may impose a significant burden on the remote operator. Furthermore, during the remote operation, it is demanded that the vehicle travel safely. Note that when the mobile body is a vehicle, movement is also referred to as travel, and the movement task is also referred to as a travel task.

Thus, the inventors carried out diligent research and development on an information processing method and device that allows for a reduced burden on a remote operator present at a remote location while ensuring the safety of a vehicle, and found that through proper assignment of vehicle control based on an autonomous driving function and vehicle control based on the remote operator according to the aforementioned various situations, the burden on the remote operator can be reduced and the safety of the whole system can be ensured.

An information processing method according to one aspect of the present disclosure is an information processing method for causing a computer to execute: obtaining information regarding a state of a mobile body capable of autonomous driving and manually controlled remote driving; determining a first operation control based on information regarding the state of the mobile body when the mobile body is switched from the autonomous driving to the manually controlled remote driving, the first operation control being included in operation control of the mobile body and involving a manually controlled remote operation; and causing the mobile body to operate based on the manually controlled remote operation corresponding to the first operation control, and causing the mobile body to perform a second operation control different from the first operation control.

With this, upon switching from the autonomous driving to the manually controlled remote driving, the operation control of the mobile body can be assigned to the autonomous driving function and the remote operator, and thus it is possible to reduce the burden on the remote operator as compared to the case where the remote operator performs the entire operation control. Furthermore, since the first operation control and the second operation control are determined on the basis of the state of the mobile body, the safety of the mobile body during movement is easily ensured. Thus, with the information processing method, it is possible to reduce the burden on the remote operator who operates the mobile body from a remote location while ensuring the safety of the mobile body.

Furthermore, for example, the information regarding the state of the mobile body may be communication information indicating a state of communication between the mobile body and a remote operation device for operating the mobile body from a remote location via the communication.

With this, since the first operation control and the second operation control are determined on the basis of the state of communication, the safety of the mobile body during movement is more easily ensured.

Furthermore, for example, in the determining of the first operation control, the first operation control may be determined based on an association between the state of communication and the operation control of the mobile body for which the manually controlled remote operation is permitted.

Thus, with the information processing method, it is possible to easily determine the first operation control by merely obtaining the state of communication when the association is set in advance.

Furthermore, for example, in the determining of the first operation control, the first operation control in which the manually controlled remote operation permitted includes more processes, becomes more complex, or becomes more advanced as the state of communication improves may be determined.

With this, it is possible to determine, as the manually controlled remote operation to be performed by the remote operator, the first operation control that includes more processes, becomes more complex, or becomes more advanced when the remote operation can be more safely performed from the perspective of the state of communication. Thus, with the information processing method, the control operation that can be controlled by the autonomous driving function and the remote operator can be limited according to the state of communication, meaning that the safety can be ensured and the burden on the remote operator can be reduced according to the state of communication.

Furthermore, for example, the state of communication may include a state of a communication delay or a communication band in the communication between the mobile body and the remote operation device.

Thus, with the information processing method, it is possible to determine, by merely obtaining the communication delay or the communication band, the first operation control and the second operation control that allow for a reduced burden on the remote operator present at a remote location while ensuring the safety of the mobile body.

Furthermore, for example, the information processing method may further include: obtaining sensing information indicating a state of sensing around the mobile body; and determining the first operation control based on the communication information and the sensing information.

With this, the state of sensing can also be taken into consideration in determining the control operation that can be controlled by the autonomous driving function and the remote operator, meaning that it is possible to more appropriately determine the first operation control and the second operation control that can reduce the burden on the remote operator and ensure the safety of the mobile body during movement. Thus, with the information processing method, it is possible to further reduce the burden on the remote operator preset at a remote location while further ensuring the safety of the mobile body.

Furthermore, for example, in the determining of the first operation control, based on an association between (i) the state of communication and the state of sensing and (ii) the operation control of the mobile body for which the manually controlled remote operation is permitted, the first operation control in which the manually controlled remote operation permitted includes more processes, becomes more complex, or becomes more advanced as the state of sensing improves may be determined.

With this, it is possible to determine, as the control operation to be performed by the remote operator, the first operation control that includes more processes, becomes more complex, or becomes more advanced when the remote operation can be more safely performed from the additional perspective of the state of sensing. Thus, with the information processing method, the control operation that can be controlled by the autonomous driving function and the remote operator can be limited according to the state of communication and the state of sensing, meaning that the safety can be ensured and the burden on the remote operator can be reduced according to the state of communication and the state of sensing.

Furthermore, for example, the state of sensing may include a processing delay or a loss of image data, sound data, or point group data.

Thus, with the information processing method, it is possible to determine the first operation control and the second operation control that are more appropriate, by merely further obtaining a processing delay or a loss of the image data, the sound data, or the point group data.

Furthermore, for example, the information processing method may further include: obtaining location information indicating a location of the mobile body; and determining the first operation control based on the communication information and the location information.

With this, the location of the mobile body can also be taken into consideration in determining the control operation that can be controlled by the autonomous driving function and the remote operator, meaning that it is possible to more appropriately determine the first operation control and the second operation control that can reduce the burden on the remote operator and ensure the safety of the mobile body during movement. Thus, with the information processing method, it is possible to further reduce the burden on the remote operator preset at a remote location while further ensuring the safety of the mobile body.

Furthermore, for example, in the determining of the first operation control, based on an association between (i) the state of communication and the location of the mobile body and (ii) the operation control of the mobile body for which the manually controlled remote operation is permitted, the first operation control in which the manually controlled remote operation permitted includes more processes, becomes more complex, or becomes more advanced as a level of safety of the mobile body in the autonomous driving at the location of the mobile body decreases may be determined.

With this, it is possible to determine, as the control operation to be performed by the remote operator, the first operation control that includes more processes, becomes more complex, or becomes more advanced when the level of safety of the mobile body in autonomous driving is low from the additional perspective of the safety of the mobile body at the location of the mobile body. Thus, with the information processing method, the control operation that can be controlled by the autonomous driving function and the remote operator can be limited according to the state of communication and the location of the mobile body, meaning that the safety can be ensured and the burden on the remote operator can be reduced according to the state of communication and the location of the mobile body.

Furthermore, for example, the location of the mobile body may include one of a position of the mobile body and a position on a travel route for the mobile body.

Thus, with the information processing method, it is possible to determine the first operation control and the second operation control that are more appropriate, by merely further obtaining one of the position of the mobile body and the position on the travel route for the mobile body.

Furthermore, for example, the information processing method may further include: obtaining movement state information indicating a state of movement of the mobile body; and determining the first operation control based on the communication information and the movement state information.

With this, the state of movement of the mobile body can also be taken into consideration in determining the control operation that can be controlled by the autonomous driving function and the remote operator, meaning that it is possible to more appropriately determine the first operation control and the second operation control that can reduce the burden on the remote operator and ensure the safety of the mobile body during movement. Thus, with the information processing method, it is possible to further reduce the burden on the remote operator who operates the mobile body from a remote location while further ensuring the safety of the mobile body.

Furthermore, for example, in the determining of the first operation control, based on an association between (i) the state of communication and the state of movement of the mobile body and (ii) the operation control of the mobile body for which the manually controlled remote operation is permitted, the first operation control in which the manually controlled remote operation permitted includes more processes, becomes more complex, or becomes more advanced as a level of safety of the mobile body in the state of movement of the mobile body increases may be determined.

With this, it is possible to determine, as the control operation to be performed by the remote operator, the first operation control that includes more processes, becomes more complex, or becomes more advanced when the level of safety of the mobile body is high from the additional perspective of safety of the mobile body in the state of movement. Thus, with the information processing method, the control operation that can be controlled by the autonomous driving function and the remote operator can be limited according to the state of communication and the state of movement of the mobile body, meaning that the safety can be ensured and the burden on the remote operator can be reduced according to the state of communication and the state of movement of the mobile body.

Furthermore, for example, the state of movement of the mobile body may include a speed of the mobile body.

Thus, with the information processing method, it is possible to determine the first operation control and the second operation control that are more appropriate, by merely further obtaining the speed of the mobile body.

Furthermore, for example, the information processing method may further include: obtaining environmental information indicating a surrounding environment for the mobile body; and determining the first operation control based on the communication information and the environmental information.

With this, the surrounding environment for the mobile body can also be taken into consideration in determining the control operation that can be controlled by the autonomous driving function and the remote operator, meaning that it is possible to more appropriately determine the first operation control and the second operation control that can reduce the burden on the remote operator and ensure the safety of the mobile body during movement. Thus, with the information processing method, it is possible to further reduce the burden on the remote operator preset at a remote location while further ensuring the safety of the mobile body.

Furthermore, for example, in the determining of the first operation control, based on an association between (i) the state of communication and the surrounding environment for the mobile body and (ii) the operation control of the mobile body for which the manually controlled remote operation is permitted, the first operation control in which the manually controlled remote operation permitted includes more processes, becomes more complex, or becomes more advanced as a level of safety of the mobile body in the autonomous driving in the surrounding environment for the mobile body decreases may be determined.

With this, it is possible to determine, as the control operation to be performed by the remote operator, the first operation control that includes more processes, becomes more complex, or becomes more advanced when the level of safety of the mobile body in autonomous driving is low from the additional perspective of safety in the surrounding environment for the mobile body. Thus, with the information processing method, the control operation that can be controlled by the autonomous driving function and the remote operator can be limited according to the state of communication and the surrounding environment for the mobile body, meaning that the safety can be ensured and the burden on the remote operator can be reduced according to the state of communication and the surrounding environment for the mobile body.

Furthermore, for example, the surrounding environment for the mobile body may include one of a state of an obstacle, a state of a road surface, and weather.

Thus, with the information processing method, it is possible to determine the first operation control and the second operation control that are more appropriate, by merely further obtaining one of the state of the obstacle, the state of the road surface, and the weather.

Furthermore, for example, the information processing method may further include: obtaining movement task information indicating a movement task for movement of the mobile body; and determining the first operation control based on the communication information and the movement task information.

With this, the movement task to be performed for movement can also be taken into consideration in determining the control operation that can be controlled by the autonomous driving function and the remote operator, meaning that it is possible to more appropriately determine the first operation control and the second operation control that can reduce the burden on the remote operator and ensure the safety of the mobile body during movement. Thus, with the information processing method, it is possible to further reduce the burden on the remote operator who operates the mobile body from a remote location while further ensuring the safety of the vehicle.

Furthermore, for example, in the determining of the first operation control, based on an association between (i) the state of communication and the movement task and (ii) the operation control of the mobile body for which the manually controlled remote operation is permitted, the first operation control in which the manually controlled remote operation permitted includes more processes, becomes more complex, or becomes more advanced as a level of complexity of the movement task increases may be determined.

With this, it is possible to determine, as the control operation to be performed by the remote operator, the first operation control that includes more processes, becomes more complex, or becomes more advanced when the level of complexity of the movement task is high. Thus, with the information processing method, the control operation that can be controlled by the autonomous driving function and the remote operator can be limited according to the state of communication and the movement task permitted, meaning that the safety can be ensured and the burden on the remote operator can be reduced according to the state of communication and a feasible movement task.

Furthermore, for example, the movement task may include one of proceeding straight, turning right or left, avoiding parking on a road, reversing, and pulling over.

Thus, with the information processing method, it is possible to determine the first operation control and the second operation control that are more appropriate, by merely further obtaining the permissibility of one of proceeding straight, turning right or left, avoiding parking on a road, reversing, and pulling over.

An information processing system according to one aspect of the present disclosure includes: an obtainer that obtains information regarding a state of a mobile body capable of autonomous driving and manually controlled remote driving; a determiner that determines a first operation control based on the information regarding the state of the mobile body when the mobile body is switched from the autonomous driving to the manually controlled remote driving, the first operation control being included in operation control of the mobile body and involving a manually controlled remote operation; and a switch instruction unit that causes the mobile body to operate based on the manually controlled remote operation corresponding to the first operation control, and causes the mobile body to perform a second operation control different from the first operation control.

This produces substantially the same advantageous effects as those produced by the above-described information processing method.

Note that these general or specific aspects may be implemented using a system, a device, a method, an integrated circuit, a computer program, or a non-transitory computer-readable recording medium such as a compact disc read-only memory (CD-ROM), or any combination of systems, devices, methods, integrated circuits, computer programs, and recording media.

Hereinafter, a specific example of the information processing method and system according to one aspect of the present disclosure will be described with reference to the drawings. Each embodiment described herein shows one specific example of the present disclosure. Therefore, the numerical values, structural elements, steps, the processing order of the steps, etc., shown in the following embodiment are mere examples and do not limit the present disclosure. Among the structural elements in the following embodiment, structural elements not recited in any one of the independent claims are described as arbitrary structural elements. Furthermore, in every embodiment, it is also possible to combine features in different embodiments.

Note that the figures are schematic diagrams and are not necessarily precise illustrations. Therefore, for example, scales, etc., of the figures are not necessarily the same. In the figures, substantially identical elements are assigned the same reference signs, and overlapping description is omitted or simplified.

In the present disclosure, the numerical values and ranges are expressions that do not represent exact numerical values and ranges only, but cover equivalent ranges, for example, include a difference of about a few percent.

### [Embodiment]

Hereinafter, an information processing method, etc., according to the present embodiment will be described with reference to FIG. 1 to FIG. 7.

### [1. Configuration of Vehicle Control System]

First, the configuration of vehicle control system 10 according to the present embodiment will be described with reference to FIG. 1 and FIG. 2. FIG. 1 is a diagram illustrating the outline configuration of vehicle control system 10 according to the present embodiment.

As illustrated in FIG. 1, vehicle control system 10 includes remote operation system 100, network 300, wireless base station 310, and vehicle 200. Vehicle control system 10 connects vehicle 200 and remote operation system 100 (for example, remote operation device 130) via wireless base station 310 such as a wireless LAN and a communication terminal and network 300 so as to allow communication therebetween.

Each of wireless base station 310 and network 300 is one example of the communication network. Vehicle 200 is one example of the mobile body on which remote operator H performs at least the manually controlled remote operation. Vehicle 200 is capable of autonomous driving and manually controlled remote driving based on the remote operation. Note that vehicle control system 10 is one example of the information processing system. Hereinafter, the manually controlled remote operation will be also referred to simply as the remote operation.

Although details will be described later, remote operation system 100 switches the travel mode of vehicle 200 from one of an autonomous travel mode (for example, a full autonomous travel mode) and a remote operation mode to the other. The remote operation mode includes: a full remote operation mode in which remote operator H performs the entire operation that can be controlled remotely; and an assigning travel mode which is midway between the autonomous travel mode and the full remote operation mode. In the present embodiment, remote operation system 100 is characterized by being capable of controlling vehicle 200 in the assigning travel mode. The operation that can be controlled remotely is, for example, the control operation indicated in FIG. 3 to be described later, and includes, but not limited to, the accelerator operation, the brake operation, the steering wheel operation, and the presenting operation, for example.

The autonomous travel mode is a travel mode in which passengers and remote operator H are not involved in the vehicle control of vehicle 200. The autonomous travel mode is also referred to as an autonomous driving mode. In the autonomous travel mode, remote operator H performs remote monitoring, but does not perform the remote operation, for example. The full remote operation mode is a travel mode in which passengers and the autonomous driving system are not involved in the vehicle control of vehicle 200. In the full remote operation mode, remote operator H performs the entire operation that can be controlled remotely, for example. The assigning travel mode is a travel mode in which both remote operator H and the autonomous driving system are involved in the vehicle control of vehicle 200. In the assigning travel mode, remote operator H performs, for example, only part of the operation that can be controlled remotely (for example, the accelerator operation), and the autonomous driving system performs the rest of the operation (for example, the brake operation, the steering wheel operation, and the presenting operation).

Note that remote operator H is one example of a supervisor who monitors self-driving vehicle 200 from a remote location from which said vehicle 200 cannot be directly monitored. Being unable to perform the direct monitoring means being unable to visually check vehicle 200 with the naked eye. This means that remote operator H monitors and operates vehicle 200 remotely from a location different from the surroundings of said vehicle 200.

The configuration of vehicle control system 10 will be described below.

Remote operation system 100 is used to allow remote operator H present at a remote location to monitor the travel of vehicle 200 remotely and operate vehicle 200 remotely as necessary. Remote operation system 100 includes presentation unit 110, vehicle operation unit 120, and remote operation device 130. Note that presentation unit 110 and vehicle operation unit 120 constitute an input/output system (refer to input/output system 100a illustrated in FIG. 2). In other words, remote operation system 100 includes input/output system 100a and remote operation device 130.

Presentation unit 110 presents a variety of information to remote operator H. Presentation unit 110 is connected to remote operation device 130 and includes a display device that displays information regarding vehicle 200. The display device is, but not limited to, a liquid crystal display device or the like, for example. Presentation unit 110 displays information that allows remote operator H to monitor and operate the travel of vehicle 200 remotely. For example, presentation unit 110 may display video captured by an imager installed in vehicle 200. Furthermore, presentation unit 110 may display information processed by remote operation device 130. Moreover, presentation unit 110 may display, using a graphical user interface (GUI), a button that allows remote operator H to switch the travel mode of vehicle 200 or perform the operation to maintain the travel mode. In addition, presentation unit 110 may display information of a surveillance area or the like that is required to be monitored by remote operator H, for example. Details of the information to be displayed by presentation unit 110 will be described later.

Note that the form of presentation of a variety of information by presentation unit 110 is not limited to displaying. Presentation unit 110 may present a variety of information with the use of sound, projection, or the like, for example.

Vehicle operation unit 120 receives various operations related to the remote operation of vehicle 200 performed by remote operator H. Vehicle operation unit 120 receives the operation performed by remote operator H to operate vehicle 200 remotely in the remote operation mode or the assigning travel mode. Vehicle operation unit 120 is, for example, a steering wheel and foot pedals (for example, an accelerator pedal and a brake pedal), but may be a joystick or the like.

Furthermore, vehicle operation unit 120 may include, for example, a receiver configured to receive various inputs such as selection made by remote operator H. The receiver is a touch panel or the like, but may be a hardware key (hardware button), a slide switch, or the like. Furthermore, vehicle operation unit 120 may receive various inputs of information based on speech, gesture, lines of sight, etc., of remote operator H.

Remote operation device 130 performs various processes related to the vehicle control (for example, the remote operation) of vehicle 200. When vehicle 200 is forced into a situation where autonomous driving is not permitted, remote operation device 130 performs processing for switching the travel mode of vehicle 200. Even when vehicle 200 is forced into a situation where autonomous driving is not permitted, remote operation device 130 reduces the burden on remote operator H by reducing the frequency at which said remote operator H performs the remote operation. Specifically, when vehicle 200 is forced into a situation where autonomous driving is not permitted and a predetermined condition is satisfied, remote operation device 130 can switch the travel mode to the assigning travel mode instead of the full remote operation mode, and when switching to said assigning travel mode, can reduce the vehicle control-related burden on remote operator H compared to that imposed when switching to the full remote operation mode.

Note that the travel mode of vehicle 200 can be switched not only when vehicle 200 is forced into a situation where autonomous driving is not permitted, but also during the remote operation performed by remote operator H, depending on the situation or the remote operation skill of remote operator H, for example. For example, the travel mode may be switched according to the number of vehicles 200 that are being monitored or operated remotely by remote operator H. Furthermore, when the remote operation skill of remote operator H is low, the travel mode may be switched over to a travel mode in which the operation burden is lower than the operation burden imposed on other remote operators with high remote operation skill.

As mentioned above, remote operation device 130 includes the assigning travel mode in addition to the autonomous travel mode and the full remote operation mode, which are existing travel modes. Note that remote operation device 130 is one example of the information processing system. Remote operation device 130 may be a server device.

Vehicle 200 is one example of the mobile body in which persons including a driver ride and is monitored or operated remotely by remote operator H as necessary. Vehicle 200 is a self-driving car. Vehicle 200 may be a self-driving car capable of switching between autonomous driving and manually controlled driving. Note that the self-driving car is not particularly limited as long as the self-driving car is capable of autonomous driving and remote-controlled driving; the self-driving car may be, for example, a bus capable of autonomous driving, a taxi capable of autonomous driving, a private car capable of autonomous driving, a truck capable of autonomous driving, a construction vehicle (for example, a dump truck) capable of autonomous driving, or an unmanned transport robot capable of autonomous traveling and being operated remotely.

Next, the functional configuration of each structural element of vehicle control system 10 will be described with reference to FIG. 2. FIG. 2 is a block diagram illustrating the functional configuration of vehicle control system 10 according to the present embodiment. Note that in FIG. 2, among various structural elements included in vehicle control system 10, only input/output system 100a, remote operation device 130, and vehicle 200 are illustrated. Description of the functional configuration of input/output system 100a will not be repeated as that has already been described earlier.

As illustrated in FIG. 2, remote operation device 130 includes feasible operation determiner 131, travel continuance permissibility determiner 132, control signal switch instruction unit 133, and communication state measurement unit 134.

Feasible operation determiner 131 determines a travel task for travel of vehicle 200. When the autonomous travel of vehicle 200 becomes impermissible, feasible operation determiner 131 determines a current travel task for travel of vehicle 200 on the basis of at least one of the surrounding environment for vehicle 200 and the result of sensing that have been obtained from environmental information obtainer 210. The travel task is one example of the feasible operation information.

Feasible operation determiner 131 may determine a feasible operation with reference to a table in which surrounding environments, etc., for vehicle 20 and feasible operations are associated with each other or may obtain a feasible operation by inputting the surrounding environment, etc., for vehicle 200 to a trained model that has been trained to output a feasible operation when the surrounding environment, etc., for vehicle 200 is input thereto, for example.

Travel continuance permissibility determiner 132 determines, during travel of vehicle 200, whether a travel permitting condition (operational design domain (ODD)) (for example, refer to FIG. 5 to be described later) which is a condition required to travel in the current travel mode is satisfied. For example, when vehicle 200 is traveling in the autonomous travel mode, travel continuance permissibility determiner 132 determines, at intervals of predetermined time, whether the travel permitting condition corresponding to said autonomous travel mode is satisfied.

When traveling in the autonomous travel mode becomes impermissible, control signal switch instruction unit 133 performs processing for determining a travel mode to which vehicle 200 can be switched, on the basis of at least one of communication information, sensing information, location information, travel information, environmental information, and travel task information, and the travel permitting condition that is set for each travel mode and is required for traveling in said travel mode. In the present embodiment, on the basis of at least the communication information and the travel permitting condition, control signal switch instruction unit 133 determines a travel mode to which vehicle 200 can be switched. Note that the travel information is one example of the movement state information.

In the present embodiment, although details will be described later, control signal switch instruction unit 133 has three travel modes, namely, an accelerator manually controlled travel mode, a brake manually controlled travel mode, and a steering wheel manually controlled travel mode as the assigning travel mode (refer to FIG. 3 to be described later). Control signal switch instruction unit 133 may determine a travel mode to be applied after switching on the basis of the travel mode corresponding to the satisfied travel permitting condition among the accelerator manually controlled travel mode, the brake manually controlled travel mode, the steering wheel manually controlled travel mode, and the full remote operation mode. Control signal switch instruction unit 133 is one example of the determiner.

Control signal switch instruction unit 133 outputs, to vehicle 200, information indicating the travel mode determined. Note that the process in which control signal switch instruction unit 133 determines a travel mode to which the vehicle can be switched will be described later.

Communication state measurement unit 134 measures the state of communication performed between remote operation device 130 and vehicle 200. Communication state measurement unit 134 measures, as the state of communication, the value of a communication delay or a communication band in the communication between remote operation device 130 and vehicle 200. It is sufficient that the state of communication include at least one value of the communication delay and the communication band. Furthermore, the state of communication may include the rate of packet loss or the like. Note that the information indicating the state of communication is one example of the communication information.

Communication state measurement unit 134 receives information for calculating time of a delay in the communication network (for example, a round-trip time (RTT) measurement packet) and measures a communication delay on the basis of the received RTT measurement packet, for example. Communication state measurement unit 134 receives, from vehicle 200, the RTT measurement packet with a time stamp attached thereto, and measures a communication delay on the basis of said time stamp and the receipt time of said RTT measurement packet, for example. Note that the communication delay may be single-trip delay time or round-drip delay time.

Furthermore, communication state measurement unit 134 may transmit data to a specific device (for example, vehicle 200) connected to the communication network and measure the communication band on the basis of the amount of data successfully received by said device within a predetermined unit of time. Moreover, communication state measurement unit 134 may receive data from a specific device (for example, vehicle 200) connected to the communication network and measure the communication band on the basis of the amount of data successfully received by communication state measurement unit 134 within a predetermined unit of time.

The timing for communication state measurement unit 134 to measure the state of communication is not particularly limited; communication state measurement unit 134 may measure the state of communication regularly or may measure the state of communication when the travel mode is switched. Furthermore, the method for communication state measurement unit 134 to measure the state of communication is not particularly limited; any known methods may be used.

Furthermore, communication state measurement unit 134 may obtain, by measurement, sensing information indicating the state of sensing around vehicle 200. The state of sensing includes a processing delay or a loss of image data, sound data, or point group data. The processing delay indicates a processing delay that occurs in each of a detection process for input to the receiver included in vehicle operation unit 120, internal processing of a computer, and processing for presenting information on presentation unit 110. The loss indicates a phenomenon in which, in the case of image data as an example, part of frames is not displayed for some reason and images are interrupted for a moment. Note that the loss includes dropped frames, for example. Furthermore, the processing for presenting includes processing for displaying, for example.

Communication state measurement unit 134 may obtain the state of sensing in vehicle control system 10 on the basis of the state of sensing in vehicle 200 and the state of sensing in remote operation system 100. In the case of a processing delay as an example, communication state measurement unit 134 may obtain, as a processing delay in vehicle control system 10, the length of time calculated by subtracting the communication delay from the length of time taken from the point in time at which environmental information obtainer 210 obtains the result of sensing until presentation unit 110 presents information based on said result of sensing. This processing delay is a single-trip delay. The result of sensing includes at least one of images, sound, and point group data, for example.

Vehicle 200 is a mobile body capable of autonomous driving and manually controlled remote driving. Vehicle 200 includes environmental information obtainer 210, vehicle information obtainer 220, autonomous driving system 230, control signal switcher 240, and vehicle controller 250.

Environmental information obtainer 210 obtains environmental information indicating a surrounding environment including the state of the surroundings of vehicle 200. Environmental information obtainer 210 obtains the state of the surroundings of vehicle 200 from various sensors installed in vehicle 200. The state of the surroundings of vehicle 200 includes the state of an obstacle, the state of a road surface, and weather. Various sensors include at least one of an image sensor, a microphone, and a point group detection sensor, for example.

The state of an obstacle includes at least one of the size, position, speed, and the like of the obstacle and can be obtained, for example, on the basis of the result of sensing by sensors such as a camera and a light detection and ranging (LiDAR) sensor.

The state of a road surface includes at least one of a dry state, a wet state, a snow-covered state, a frozen state, and the like of the road surface on which vehicle 200 travels, and can be obtained, for example, on the basis of the result of sensing of the road surface by sensors such as a polarization camera. The result of sensing may be an image, for example. Note that the "dry state" means the state where the road surface is dry, the "wet state" means the state where the road surface is wet, the "snow-covered state" means the state where snow has accumulated on the road surface, and the "frozen state" means the state where the road surface is frozen. Furthermore, the state of a road surface may include a depression or the like in the road.

The weather includes at least one of a sunny weather, a cloudy weather, a foggy weather, a rainy weather, a snowy weather, a thunderstorm, and the like and can be obtained, for example, on the basis of the result of sensing of the sky by sensors such as a polarization camera.

Note that the method for obtaining the state of the surroundings of vehicle 200 is not limited to the above-described method; any known technique may be used. The state of the road surface and the weather are not limited to those obtained on the basis of the result of sensing and may be obtained from an external device or the like. The state of the surroundings may include information regarding earthquakes, information regarding wind, and the like. The state of the surroundings may include an image of the surroundings of vehicle 200 captured by a camera. Note that the external device may be, for example, a server device that manages the state of a road surface and weather. The information regarding earthquakes may include seismic intensity, an earthquake source, and the like, for example, and the information regarding wind may include a wind speed and the like, for example.

Vehicle information obtainer 220 obtains vehicle information indicating the vehicle state of vehicle 200. The vehicle state includes the state of traveling of vehicle 200. The state of traveling of vehicle 200 includes the speed of vehicle 200. The speed of vehicle 200 is, for example, the current speed. The state of traveling of vehicle 200 may further include the rudder angle, acceleration, etc., of vehicle 200. The vehicle information may further include the specification information, etc., of vehicle 200. The specification information may include travel task information indicating a travel task for travel of vehicle 200 or may include at least one of the size, the wheelbase, the maximum rudder angle, the maximum vehicle speed, the maximum acceleration, the maximum deceleration, and obstacle detection performance of vehicle 200. The travel task includes proceeding straight, turning right or left, avoiding parking on a road, reversing, or pulling over. Note that the state of traveling is one example of the state of movement.

Vehicle information obtainer 220 may obtain the vehicle state from an external device or may obtain the vehicle state on the basis of the results of sensing by various sensors. The external device may be a server device that manages the specification information of vehicle 200, for example.

Furthermore, vehicle information obtainer 220 may obtain location information indicating the location of vehicle 200. The location information is also referred to as position information. The location of vehicle 200 includes at least one of the position of vehicle 200 and the position of vehicle 200 on a driving route. The position of vehicle 200 may be the current position. Vehicle information obtainer 220 may include, for example, a global positioning system (GPS) module that obtains a GPS signal (specifically, radio waves output from a satellite) and obtains the current position of vehicle 200 by measuring said current position on the basis of the obtained GPS signal. Furthermore, vehicle information obtainer 220 may obtain a driving route based on a travel plan created by autonomous driving system 230 and thereby obtain the position of vehicle 200 on the driving route. The location may be expressed as an area. The area may be a traffic lane, a road section, a parcel, or the like. Note that the driving route is one example of the travel route.

Furthermore, vehicle information obtainer 220 may obtain the state of autonomous driving system 230 as the vehicle information. The state of autonomous driving system 230 includes information indicating whether autonomous driving system 230 is normal.

Autonomous driving system 230 performs processing for vehicle 200 to drive itself. Autonomous driving system 230 creates the autonomous driving travel plan on the basis of the vehicle information or the like. The travel plan includes a travel path, a speed, and the like. Furthermore, in the case of traveling in the autonomous travel mode, in order to implement the created travel plan, autonomous driving system 230 generates a control signal based on the travel plan and outputs the control signal to control signal switcher 240.

Control signal switcher 240 outputs, to vehicle controller 250, the control signal to be used to achieve the travel corresponding to the travel mode determined by control signal switch instruction unit 133. In the case of traveling in the autonomous travel mode, control signal switcher 240 outputs, to vehicle controller 250, the control signal received from autonomous driving system 230. In the case of traveling in the autonomous travel mode, even when control signal switcher 240 receives the control signal from vehicle operation unit 120, control signal switcher 240 does not output said control signal to vehicle controller 250.

In the case of traveling in the full remote operation mode included in the remote operation mode, control signal switcher 240 outputs, to vehicle controller 250, the control signal received from vehicle operation unit 120. In the case of traveling in the full remote operation mode, even when control signal switcher 240 receives the control signal from autonomous driving system 230, control signal switcher 240 does not output said control signal to vehicle controller 250. In other words, in the case of traveling in the full remote operation mode, control signal switcher 240 outputs, to vehicle controller 250, the control signal received from vehicle operation unit 120, instead of the control signal received from autonomous driving system 230.

In the case of traveling in the assigning travel mode included in the remote operation mode, control signal switcher 240 extracts necessary information from each of the control signal received from vehicle operation unit 120 and the control signal received from autonomous driving system 230, and outputs the extracted information to vehicle controller 250. In the case of traveling in the accelerator manually controlled travel mode, control signal switcher 240 extracts, from the control signal received from autonomous driving system 230, information different from information of the accelerator and the parking brake, extracts, from the control signal received from vehicle operation unit 120, the information regarding the accelerator and the parking brake, and outputs the control signal including the extracted information to vehicle controller 250. In other words, in the case of traveling in the accelerator manually controlled travel mode, control signal switcher 240 replaces the information regarding the accelerator and the parking brake included in the control signal received from autonomous driving system 230 by the information regarding the accelerator and the parking brake received from vehicle operation unit 120, and outputs the control signal.

Vehicle controller 250 performs control related to the travel of vehicle 200 and the presentation on the basis of the control signal received from control signal switcher 240.

### [2. Description of Travel Modes]

Next, the travel modes including the assigning travel mode will be described with reference to FIG. 3. FIG. 3 is a diagram illustrating one example of assignment of vehicle control in the travel modes. FIG. 3 shows the association between the travel modes and control operations that are performed in the respective travel modes. The travel modes include the autonomous travel mode, the accelerator manually controlled travel mode, the brake manually controlled travel mode, the steering wheel manually controlled travel mode, and the full remote operation mode. The control operations include a parking brake operation, an accelerator operation, a brake operation, a steering wheel operation, and operations that are performed on presentation devices such as hazard lights, a blinker, and vehicle surroundings presentation device. Hereinafter, the operations that are performed on the presentation devices will be also referred to as presenting operations.

As illustrated in FIG. 3, the autonomous travel mode is a travel mode in which all the control operations are performed by the autonomous driving function (autonomous driving system 230).

The accelerator manually controlled travel mode is a travel mode in which among the control operations, the parking brake operation and the accelerator operation are performed by remote operation, and the other control operations are performed by the autonomous driving function. The parking brake operation and the accelerator operation are one example of the first operation control that remote operator H is permitted to perform or that is to be performed by remote operation in the accelerator manually controlled travel mode. The other control operations (the brake operation, the steering wheel operation, and the presenting operation) are one example of the second operation control different from the first operation control in the accelerator manually controlled travel mode.

The brake manually controlled travel mode is a travel mode in which among the control operations, the parking brake operation and the brake operation are performed by remote operation, and the other control operations are performed by the autonomous driving function. The parking brake operation and the brake operation are one example of the first operation control in the brake manually controlled travel mode. The other control operations (the accelerator operation, the steering wheel operation, and the presenting operation) are one example of the second operation control different from the first operation control in the brake manually controlled travel mode.

The steering wheel manually controlled travel mode is a travel mode in which among the control operations, the parking brake operation, the steering wheel operation, and the presenting operation are performed by remote operation, and the other control operations are performed by the autonomous driving function. The parking brake operation, the steering wheel operation, and the presenting operation are one example of the first operation control in the steering wheel manually controlled travel mode. The other control operations (the accelerator operation and the brake operation) are one example of the second operation control different from the first operation control in the steering wheel manually controlled travel mode.

The full remote operation mode is a travel mode in which all the control operations are performed by remote operation. The parking brake operation, the accelerator operation, the brake operation, the steering wheel operation, and the presenting operation are one example of the first operation control in the full remote operation mode.

In other words, FIG. 3 shows, for each travel mode, operation control for which the manually controlled remote operation is permitted, as described above.

The burden on remote operator H tends to increase in the following order: the accelerator manually controlled travel mode, the brake manually controlled travel mode, the steering wheel manually controlled travel mode, and the full remote operation mode, for example. In other words, the remote operation that remote operator H is permitted to perform or that is to be performed in the remote operation mode includes more processes, becomes more complex, or becomes more advanced in said order, for example. Including more processes indicate the number of remote operations that are performed by remote operator H and is 2, 2, 3, and 5 in said order. Becoming more complex indicates the number of remote operations that are performed by remote operator H in parallel and is 1, 1, 2, and 4 in said order. Note that the parking brake operation is performed in the state where vehicle 200 is stationary, meaning that the parking brake operation is not performed in parallel with other operations; on this assumption, the number of remote operations that are performed in parallel is calculated. Becoming more advanced indicates an increase in the level of difficulty of the remote operation; the steering wheel manually controlled travel mode, which requires accurate steering wheel operation, is more difficult in terms of this feature than the accelerator manually controlled travel mode and the brake manually controlled travel mode.

The operation control includes travel control and presenting control. The travel control includes deceleration control, acceleration control, and direction control. The deceleration control is, for example, control of the parking brake or the brake. The acceleration control is, for example, control of the accelerator. The direction control is, for example, control of the steering wheel. The presenting control includes lighting control, display control, and projection control. The lighting control is, for example, control of the hazard lights or the blinkers. The display control is, for example, control of a display device such as a display. The projection control is, for example, control of a projection device such as a projector. Note that the operation control may be referred to as operation, and the travel control may be referred to as driving.

In other words, when vehicle 200 switches from driving itself to manually controlled remote driving (from the autonomous travel mode to the remote operation mode), control signal switch instruction unit 133 determines, on the basis of at least one information mentioned above, the first operation control which is subject to the manually controlled remote operation included in the operation control of vehicle 200. Subsequently, control signal switch instruction unit 133 causes vehicle 200 to operate on the basis of the manually controlled remote operation corresponding to the first operation control in the determined remote operation travel mode, and outputs instruction information to control signal switcher 240 so as to cause vehicle 200 (for example, autonomous driving system 230) to perform the second operation control different from the first operation control. Thus, control signal switch instruction unit 133 functions as the switch instruction unit. Note that the automatic control herein includes causing autonomous driving system 230 to perform at least one of the travel control and the presenting control.

Note that the assignment of the functions in the assigning travel mode is not limited to the assignment shown in FIG. 3. Furthermore, the assigning travel mode may include a travel mode different from the three travel modes described above. For example, the assigning travel mode may include a travel mode in which the accelerator operation and the brake operation are performed by remote operation and the other functions are performed by the autonomous driving function. Furthermore, the control operation is not limited to the operation shown in FIG. 3.

### [3. Description of Travel Permitting Condition]

Next, the travel permitting condition in each travel mode described above will be described with reference to FIG. 4. FIG. 4 is a diagram illustrating one example of the travel permitting conditions in the travel modes. FIG. 4 shows the association between the travel modes and the conditions in items for permitting travel in the respective travel modes. In remote operation device 130, a table showing the travel permitting conditions in the travel modes shown in FIG. 4 is stored in advance, for example.

The items of the travel permitting conditions include a communication delay (RTT), a video delay (single-trip), a band (communication band), an area, a vehicle speed, an autonomous driving system state, a pedestrian in a travel path, and a travel task. The communication delay and band are one example of the state of communication, the video delay is one example of the state of sensing, and the area is one example of the location of vehicle 200. The vehicle speed and the autonomous driving system state are one example of the state of traveling, the pedestrian in the travel path is one example of the surrounding environment, and the travel task is one example of the movement task.

In the case of determining a travel mode on the basis of the state of communication, control signal switch instruction unit 133 determines a travel mode on the basis of the association between the state of communication and the travel permitting conditions (for example, the conditions of the communication delay and band) for the respective travel modes. Note that determining of a travel mode corresponds to the determining of the first operation control which is subject to the remote operation. In the case of determining a travel mode on the basis of the travel permitting conditions shown in FIG. 4, control signal switch instruction unit 133 determines a travel mode in which the remote operation permitted includes more processes, becomes more complex, or becomes more advanced as the state of communication improves. A good state of communication means that the communication delay is small or the band is wide, for example. Put another way, this means that the communication speed is high. In other words, a good state of communication means that constraints on communication environments are strict.

In the case of determining a travel mode on the basis of the state of sensing, control signal switch instruction unit 133 determines a travel mode on the basis of the association between the state of sensing and the travel permitting conditions (for example, the conditions for the video delay) for the respective travel modes. In the case of determining a travel mode on the basis of the travel permitting conditions shown in FIG. 4, control signal switch instruction unit 133 determines a travel mode in which the remote operation permitted includes more processes, becomes more complex, or becomes more advanced as the state of sensing improves. A good state of sensing means that the video delay is small, for example.

In the case of determining a travel mode on the basis of the location information of vehicle 200, control signal switch instruction unit 133 determines a travel mode on the basis of the association between the location of vehicle 200 and the travel permitting conditions (for example, the conditions of the area) for the respective travel modes. In the case of determining a travel mode on the basis of the travel permitting conditions shown in FIG. 4, control signal switch instruction unit 133 determines a travel mode in which the remote operation permitted includes more processes, becomes more complex, or becomes more advanced as the level of safety of vehicle 200 in autonomous driving at the location indicated in the location information decreases. In other words, control signal switch instruction unit 133 determines a travel mode in which the remote operation permitted includes more processes, becomes more complex, or becomes more advanced as the level of difficulty of autonomous driving increases. A low level of safety of vehicle 200 in autonomous driving means that vehicle 200 travels in a lane different from its current lane (for example, the opposite lane, or when the current lane is a cruising lane, a passing lane or the like), for example. In other words, a low level of safety of vehicle 200 in autonomous driving means that the risk of autonomous travel is high. A low level of safety of vehicle 200 in autonomous driving may indicate that the risk of the manually controlled remote driving is relatively lower than the risk of the autonomous driving.

In the case of determining a travel mode on the basis of the state of traveling of vehicle 200, control signal switch instruction unit 133 determines a travel mode on the basis of the association between the state of traveling and the travel permitting conditions (for example, the conditions for the vehicle speed and the autonomous driving system state) for the respective travel modes. In the case of determining a travel mode on the basis of the travel permitting conditions shown in FIG. 4, control signal switch instruction unit 133 determines a travel mode in which the remote operation permitted includes more processes, becomes more complex, or becomes more advanced as the level of safety of vehicle 200 traveling at the vehicle speed increases. A high level of safety of vehicle 200 means that the vehicle speed is low, in other words, the risk of travel is low, for example.

In the case of determining a travel mode on the basis of the travel permitting conditions shown in FIG. 4, control signal switch instruction unit 133 determines a travel mode in which the remote operation performed includes more processes, becomes more complex, or becomes more advanced as the level of safety of vehicle 200 in the autonomous driving system state decreases. A low level of safety of vehicle 200 in autonomous driving means that there is an anomaly in the autonomous driving system state, for example. In other words, a low level of safety of vehicle 200 in autonomous driving may indicate that the risk of travel by the manually controlled remote driving is relatively low.

In the case of determining a travel mode on the basis of the surrounding environment for vehicle 200, control signal switch instruction unit 133 determines a travel mode on the basis of the association between the surrounding environments and the travel permitting conditions (for example, the conditions for the pedestrian in the travel path) for the respective travel modes. In the case of determining a travel mode on the basis of the travel permitting conditions shown in FIG. 4, control signal switch instruction unit 133 determines a travel mode in which the remote operation permitted includes more processes, becomes more complex, or becomes more advanced as the level of safety of vehicle 200 in autonomous driving in the surrounding environment decreases. In other words, control signal switch instruction unit 133 determines a travel mode in which the remote operation permitted includes more processes, becomes more complex, or becomes more advanced as the level of difficulty of autonomous driving increases. A low level of safety of vehicle 200 in autonomous driving means that an obstacle is present in the travel path such as a situation where there is a pedestrian in the travel path, for example. In other words, a low level of safety of vehicle 200 in autonomous driving means that the risk of travel by the autonomous driving function is high. A low level of safety of vehicle 200 in autonomous driving may indicate that the risk of the manually controlled remote driving is relatively lower than the risk of the autonomous driving.

In the case of determining a travel mode on the basis of the travel task for vehicle 200, control signal switch instruction unit 133 determines a travel mode on the basis of the association between the travel task and the travel permitting conditions (for example, feasible tasks) for the respective travel modes. In the case of determining a travel mode on the basis of the travel permitting conditions shown in FIG. 4, control signal switch instruction unit 133 determines a travel mode in which the remote operation permitted includes more processes, becomes more complex, or becomes more advanced as the level of complexity of said travel task increases. A high level of complexity of the travel task means that the operation control is accurate or determination for the operation control is complicated, for example.

In this manner, control signal switch instruction unit 133 can partially automate the vehicle operation (set automatic control that is performed by autonomous driving system 230) on the basis of at least one of the state of communication, the state of sensing, the location information of vehicle 200, the state of traveling of vehicle 200, the surrounding environment for vehicle 200, and the feasible travel task, and limit vehicle functions (control operation) that can be controlled by each of the autonomous driving function and remote operator H.

In other words, control signal switch instruction unit 133 determines a travel mode on the basis of the association between a variety of information and the operation control that is performed by the manually controlled remote operation, as shown in FIG. 4 and FIG. 5.

The foregoing has described an example in which control signal switch instruction unit 133 determines a travel mode on the basis of at least one of the state of communication, the state of sensing, the location information, the state of traveling, the surrounding environment, and the travel task, but the travel mode may be determined on the basis of two or more of the state of communication, the state of sensing, the location information, the state of traveling, the surrounding environment, and the travel task.

### [4. Operation of Vehicle Control System]

Next, the operation of vehicle control system 10 described above (one example of the information processing method) will be described with reference to FIG. 5 to FIG. 7. FIG. 5 is a flowchart illustrating the operation of vehicle control system 10 according to the present embodiment. Specifically, FIG. 5 illustrates the operation of remote operation device 130. Note that the following describes an example in which control signal switch instruction unit 133 determines a travel mode on the basis of communication information indicating the state of communication between at least remote operation device 130 and vehicle 200.

As illustrated in FIG. 5, vehicle 200 starts traveling in the autonomous travel mode (S10).

Next, control signal switch instruction unit 133 obtains the communication information, the location information, the environmental information, and the vehicle information (S20). Control signal switch instruction unit 133 obtains the communication information from communication state measurement unit 134 and obtains the location information, the environmental information, and the vehicle information from vehicle 200. Control signal switch instruction unit 133 may output necessary information included in the obtained variety of information to travel continuance permissibility determiner 132. It is sufficient that in Step S20, at least one of the communication information, the location information, the environmental information, and the vehicle information be obtained. In the present embodiment, it is sufficient that in Step S20, at least the communication information be obtained. Furthermore, control signal switch instruction unit 133 may obtain the feasible operation information from feasible operation determiner 131. Moreover, control signal switch instruction unit 133 also functions as an obtainer that obtains a variety of information described above. At least one of the communication information, the location information, the environmental information, and the vehicle information is one example of the information regarding the state of the mobile body.

Note that the timing for control signal switch instruction unit 133 to obtain the communication information, the location information, the environmental information, the vehicle information, and the feasible operation information is not particularly limited; these may be obtained regularly or may be obtained on the basis of operation performed by remote operator H. The communication information, the location information, the environmental information, the vehicle information, and the feasible operation information may be obtained at different points in time or may be obtained at the same time.

Next, travel continuance permissibility determiner 132 determines whether continuance of the travel in the autonomous travel mode is permissible (S30). For example, on the basis of the travel permitting condition corresponding to the autonomous travel mode and a variety of information obtained in Step S20, travel continuance permissibility determiner 132 determines whether continuance of the travel in the autonomous travel mode is permissible. For example, when all the items of the travel permitting conditions in the autonomous travel mode are satisfied, travel continuance permissibility determiner 132 determines that the continuance of the travel in the autonomous travel mode is permissible, and when at least one of the items is not satisfied, travel continuance permissibility determiner 132 determines that the continuance of the travel in the autonomous travel mode is impermissible. Travel continuance permissibility determiner 132 outputs the determination result to control signal switch instruction unit 133.

When travel continuance permissibility determiner 132 determines that the continuance of the travel in the autonomous travel mode is permissible (Yes in S30), control signal switch instruction unit 133 causes the travel in the autonomous travel mode to continue (S40). This means that control signal switch instruction unit 133 does not change the travel mode.

Next, control signal switch instruction unit 133 determines whether the travel has ended (S50). Control signal switch instruction unit 133 may make the determination in Step S50 by determining, for example, whether the vehicle has reached a destination.

When the travel has ended (Yes in S50), control signal switch instruction unit 133 ends the processing related to vehicle 200. When the travel has not ended (No in S50), control signal switch instruction unit 133 returns to Step S20 and continues the processing.

When travel continuance permissibility determiner 132 determines that the continuance of the travel in the autonomous travel mode is impermissible (No in S30), control signal switch instruction unit 133 performs the process of switching the travel mode (S60). Details of Step S60 will be described later with reference to FIG. 6. Note that when the result of Step S30 is No, control signal switch instruction unit 133 may cause presentation unit 110 to present information indicating that the continuance of the travel in the autonomous travel mode is impermissible, for example. Furthermore, when the result of Step S30 is No, control signal switch instruction unit 133 may cause presentation unit 110 to display information for allowing remote operator H to select a travel mode to which the vehicle is to be switched, or may cause presentation unit 110 to display, on the basis of a variety of current information, information indicating a travel mode to which the vehicle can be switched, for example. In the case where the information indicating a travel mode to which the vehicle can be switched is displayed, control signal switch instruction unit 133 may cause a travel mode in which the burden on remote operator H is small to be shown with highlight.

Note that obtaining No as a determination result of Step S30, that is, falling into a situation where the continuance of the autonomous driving is impermissible, is one example of the switching from the autonomous driving to the manually controlled remote driving.

The following describes an example in which control signal switch instruction unit 133 causes presentation unit 110 to display the information for remote operator H to select a travel mode to which the vehicle is to be switched.

Next, control signal switch instruction unit 133 determines whether the travel mode determined in Step S60 is a fallback mode (S70). The fallback mode is a travel mode that is determined when there is no travel mode that satisfies the travel permitting condition; for example, the fallback mode is a travel mode in which the travel of vehicle 200 is stopped.

When the travel mode determined in Step S60 is the fallback mode (Yes in S70), control signal switch instruction unit 133 causes vehicle 200 to stop (for example, pull over), ending the process. When the travel mode determined in Step S60 is not the fallback mode (No in S70), control signal switch instruction unit 133 allows for traveling in the travel mode determined in Step S60. This means that the travel mode of vehicle 200 switches from the autonomous travel mode to the travel mode determined in Step S60. Subsequently, the processing returns to Step S20 and then continues.

Next, details of the process of switching the travel mode (S60) illustrated in FIG. 5 will be described with reference to FIG. 6. FIG. 6 is a flowchart illustrating the details of the process of switching the travel mode illustrated in FIG. 5. It is assumed that vehicle 200 is stationary because vehicle 200 is not permitted to travel in the autonomous travel mode.

As illustrated in FIG. 6, remote operator H selects one travel mode from among the travel modes displayed on presentation unit 110. In other words, presentation unit 110 displays information for enabling selection of a travel mode, and vehicle operation unit 120 accepts selection of a travel mode from remote operator H (S110). The information for enabling selection of a travel mode is, for example, information indicating preset travel modes; in the present embodiment, said information includes information indicating five travel modes, namely, the autonomous travel mode, the accelerator manually controlled travel mode, the brake manually controlled travel mode, the steering wheel manually controlled travel mode, and the full remote operation mode. The information for enabling selection of a travel mode may include the fallback mode.

When vehicle operation unit 120 accepts selection of a travel mode, control signal switch instruction unit 133 determines whether the autonomous travel mode has been selected and when the autonomous travel mode is selected, determines whether the travel in the autonomous travel mode is permissible (S120). When the autonomous travel mode has been selected and the travel in the autonomous travel mode is permissible (Yes in S120), control signal switch instruction unit 133 switches the travel mode to the autonomous travel mode (S130). Control signal switch instruction unit 133 outputs, to vehicle 200, instruction information indicating traveling in the autonomous travel mode. When control signal switcher 240 obtains the instruction information, control signal switcher 240 outputs, to vehicle controller 250, the control signal received from autonomous driving system 230, to cause vehicle 200 to travel in the autonomous travel mode.

Thus, for example, when the cause of the determination made as No in Step S30 is solved, control signal switch instruction unit 133 can resume the travel in the autonomous travel mode.

Note that whether the travel in the autonomous travel mode is permissible is determined on the basis of the travel permitting condition in the autonomous travel mode indicated in FIG. 4. For example, the travel permitting conditions used in Steps S120 and S30 to determine whether the travel in the automatic travel mode is permissible may be the same.

When the autonomous travel mode has not been selected (No in S120), control signal switch instruction unit 133 further determines whether the accelerator manually controlled travel mode has been selected, and when the accelerator manually controlled travel mode is selected, further determines whether the travel in the accelerator manually controlled travel mode is permissible (S140). For example, on the basis of the travel permitting condition corresponding to the accelerator manually controlled travel mode and a variety of information obtained in Step S20, control signal switch instruction unit 133 determines whether the travel in the accelerator manually controlled travel mode is permissible. Control signal switch instruction unit 133 determines, for example, in Step S140, whether the travel permitting condition in the accelerator manually controlled travel mode is satisfied.

Control signal switch instruction unit 133 may determine a travel mode on the basis of the communication information and the sensing information, may determine a travel mode on the basis of the communication information and the location information, may determine a travel mode on the basis of the communication information and the travel information, may determine a travel mode on the basis of the communication information and the environmental information, and may determine a travel mode on the basis of the communication information and the travel task information, for example.

When the accelerator manually controlled travel mode is selected and the travel in the accelerator manually controlled travel mode is permissible (Yes in S140), control signal switch instruction unit 133 switches the travel mode to the accelerator manually controlled mode (S150). Control signal switch instruction unit 133 outputs, to vehicle 200, instruction information indicating traveling in the accelerator manually controlled travel mode. When control signal switcher 240 obtains the instruction information, control signal switcher 240 replaces, by the control signal received from vehicle operation unit 120, part of the control signal received from autonomous driving system 230 that corresponds to the operations of the parking brake and the accelerator, and outputs the control signal to vehicle controller 250, to cause vehicle 200 to travel in the accelerator manually controlled travel mode.

When the accelerator manually controlled travel mode has not been selected (No in S140), control signal switch instruction unit 133 further determines whether the brake manually controlled travel mode has been selected, and when the brake manually controlled travel mode is selected, control signal switch instruction unit 133 further determines whether the travel in the brake manually controlled travel mode is permissible (S160). Control signal switch instruction unit 133 determines, for example, on the basis of the travel permitting condition corresponding to the brake manually controlled travel mode and a variety of information obtained in Step S20, whether the travel in the brake manually controlled travel mode is permissible. For example, in Step S160, control signal switch instruction unit 133 determines whether the travel permitting condition in the brake manually controlled travel mode is satisfied.

When the brake manually controlled travel mode is selected and the travel in the brake manually controlled travel mode is permissible (Yes in S160), control signal switch instruction unit 133 switches the travel mode to the brake manually controlled mode (S170). Control signal switch instruction unit 133 outputs, to vehicle 200, instruction information indicating traveling in the brake manually controlled travel mode. When control signal switcher 240 obtains the instruction information, control signal switcher 240 replaces, by the control signal received from vehicle operation unit 120, part of the control signal received from autonomous driving system 230 that corresponds to the operations of the parking brake and the brake, and outputs the control signal to vehicle controller 250, to cause vehicle 200 to travel in the brake manually controlled travel mode.

When the brake manually controlled travel mode has not been selected (No in S160), control signal switch instruction unit 133 further determines whether the steering wheel manually controlled travel mode has been selected, and when the steering wheel manually controlled travel mode is selected, control signal switch instruction unit 133 further determines whether the travel in the steering wheel manually controlled travel mode is permissible (S180). Control signal switch instruction unit 133 determines, for example, on the basis of the travel permitting condition corresponding to the steering wheel manually controlled travel mode and a variety of information obtained in Step S20, whether the travel in the steering wheel manually controlled travel mode is permissible. For example, in Step S180, control signal switch instruction unit 133 determines whether the travel permitting condition in the steering wheel manually controlled travel mode is satisfied.

When the steering wheel manually controlled travel mode is selected and the travel in the steering wheel manually controlled travel mode is permissible (Yes in S180), control signal switch instruction unit 133 switches the travel mode to the steering wheel manually controlled mode (S190). Control signal switch instruction unit 133 outputs, to vehicle 200, instruction information indicating traveling in the steering wheel manually controlled travel mode. When control signal switcher 240 obtains the instruction information, control signal switcher 240 replaces, by the control signal received from vehicle operation unit 120, part of the control signal received from autonomous driving system 230 that corresponds to the operations of the parking brake, the steering wheel, and the presentation device, and outputs the control signal to vehicle controller 250, to cause vehicle 200 to travel in the steering wheel manually controlled travel mode.

When the steering wheel manually controlled travel mode has not been selected (No in S180), control signal switch instruction unit 133 further determines whether the full remote operation mode has been selected, and when the full remote operation mode is selected, control signal switch instruction unit 133 further determines whether the travel in the full remote operation mode is permissible (S200). Control signal switch instruction unit 133 determines, for example, on the basis of the travel permitting condition corresponding to the full remote operation mode and a variety of information obtained in Step S20, whether the travel in the full remote operation mode is permissible. For example, in Step S200, control signal switch instruction unit 133 determines whether the travel permitting condition in the full remote operation mode is satisfied.

When the full remote operation mode is selected and the travel in the full remote operation mode is permissible (Yes in S200), control signal switch instruction unit 133 switches the travel mode to the full remote operation mode (S210). Control signal switch instruction unit 133 outputs, to vehicle 200, instruction information indicating traveling in the full remote operation mode. When control signal switcher 240 obtains the instruction information, control signal switcher 240 discards the control signal obtained from autonomous driving system 230 and outputs, to vehicle controller 250, the control signal received from vehicle operation unit 120, to cause vehicle 200 to travel in the full remote operation mode.

When the full remote operation mode has not been selected (No in S200) or when the full remote operation mode has been selected, but the travel in the full remote operation mode is impermissible, control signal switch instruction unit 133 determines that the travel mode is to be switched over to the fallback mode (S220). Control signal switch instruction unit 133 outputs, to vehicle 200, instruction information indicating traveling in the fallback mode. When autonomous driving system 230 obtains the instruction information, autonomous driving system 230 outputs a control signal for causing vehicle 200 to pull over to vehicle controller 250 via control signal switcher 240, to stop vehicle 200.

Note that when the accelerator manually controlled travel mode has been selected, but the travel in the accelerator manually controlled travel mode is impermissible in Step S140, when the brake manually controlled travel mode has been selected, but the travel in the brake manually controlled travel mode is impermissible in Step S160, and when the steering wheel manually controlled travel mode has been selected, but the travel in the steering wheel manually controlled travel mode is impermissible in Step S180, control signal switch instruction unit 133 may cause presentation unit 110 to display information indicating that the travel mode the selection of which has been accepted is impermissible. Furthermore, in this case, control signal switch instruction unit 133 may return to Step S110 and accept selection of a travel mode again or may cause presentation unit 110 to display information indicating a travel mode that can be selected.

In the present embodiment, control signal switch instruction unit 133 uses at least the communication information to determine, in Steps S120, S140, S160, S180, and S200, whether the travel is permissible.

Control signal switch instruction unit 133 may determine a travel mode (one example of the first operation control) on the basis of the association between only the state of communication and the operation control for which the manually controlled remote operation is permitted, for example. In this case, control signal switch instruction unit 133 may determine, as the travel mode to be applied after switching, a travel mode in which the manually controlled remote operation permitted includes more processes, becomes more complex, or becomes more advanced as the state of communication improves.

Control signal switch instruction unit 133 may determine a travel mode (one example of the first operation control) on the basis of the association between (i) the state of communication and the state of sensing and (ii) the operation control for which the manually controlled remote operation is permitted, for example. In this case, control signal switch instruction unit 133 may determine, as the travel mode to be applied after switching, a travel mode in which the manually controlled remote operation permitted includes more processes, becomes more complex, or becomes more advanced as the state of sensing improves. For example, control signal switch instruction unit 133 may determine, as the travel mode to be applied after switching, a travel mode in which the manually controlled remote operation permitted includes more processes, becomes more complex, or becomes more advanced as the state of communication and the state of sensing improve.

Control signal switch instruction unit 133 may determine a travel mode (one example of the first operation control) on the basis of the association between (i) the state of communication and the location of vehicle 200 and (ii) the operation control for which the manually controlled remote operation is permitted, for example. In this case, control signal switch instruction unit 133 may determine, as the travel mode to be applied after switching, a travel mode in which the manually controlled remote operation permitted includes more processes, becomes more complex, or becomes more advanced as the level of safety of vehicle 200 at the location of vehicle 200 decreases.

Control signal switch instruction unit 133 may determine a travel mode (one example of the first operation control) on the basis of the association between (i) the state of communication and the state of traveling of vehicle 200 and (ii) the operation control for which the manually controlled remote operation is permitted, for example. In this case, control signal switch instruction unit 133 may determine, as the travel mode to be applied after switching, a travel mode in which the manually controlled remote operation permitted includes more processes, becomes more complex, or becomes more advanced as the level of safety of vehicle 200 in the state of traveling of vehicle 200 increases.

Control signal switch instruction unit 133 may determine a travel mode (one example of the first operation control) on the basis of the association between (i) the state of communication and the surrounding environment for vehicle 200 and (ii) the operation control for which the manually controlled remote operation is permitted, for example. In this case, control signal switch instruction unit 133 may determine, as the travel mode to be applied after switching, a travel mode in which the manually controlled remote operation performed includes more processes, becomes more complex, or becomes more advanced as the level of safety of vehicle 200 in the surrounding environment for vehicle 200 decreases.

Control signal switch instruction unit 133 may determine a travel mode (one example of the first operation control) on the basis of the association between (i) the state of communication and the feasible travel task and (ii) the operation control for which the manually controlled remote operation is permitted, for example. In this case, control signal switch instruction unit 133 may determine, as the travel mode to be applied after switching, a travel mode in which the manually controlled remote operation performed includes more processes, becomes more complex, or becomes more advanced as the number of feasible travel tasks of vehicle 200 (for example, turning right or left and proceeding straight only) is reduced.

The foregoing has described an example in which control signal switch instruction unit 133 determines a travel mode using two items of information, but control signal switch instruction unit 133 may determine a travel mode using thee or more items of information. Control signal switch instruction unit 133 may determine a travel mode using each of the state of communication, the state of sensing, the location of vehicle 200, the state of traveling of vehicle 200, the surrounding environment for vehicle 200, and the feasible travel task, for example. The information to be used to determine a travel mode may be set in advance or may be set by remote operator H.

Note that after the process in Step S220 is performed as a result of obtaining No in the determination in Step S30, the process in Step S110 may be performed again after a predetermined time interval.

Next, an example of switching over to the accelerator manually controlled travel mode will be described with reference to FIG. 7. FIG. 7 is a schematic diagram for describing switching over to the accelerator manually controlled travel mode. Specifically, FIG. 7 shows one example of images in the respective states of vehicle 200 that are displayed on presentation unit 110. Note that the arrows or the dashed lines extending from vehicles 200 indicate travel paths for vehicles 200. The image to be displayed by presentation unit 110 is, for example, a top-down image, but this is not limiting. When vehicle 200 includes a surround view system, presentation unit 110 can display a top-down image.

FIG. 7 illustrates, in (a), the state where vehicle 200 is stationary because vehicle 200 has deviated from the travel permitting condition in the autonomous travel mode. Specifically, FIG. 7 illustrates, in (a), presentation unit 110 displaying an image showing the state immediately after vehicle 200 is stopped because vehicle 400 (another vehicle) is stationary ahead of vehicle 200 traveling on road L, in such a manner as to block the current lane. Furthermore, the current travel mode of vehicle 200 and a travel permissibility determination result on whether the travel of vehicle 200 in the autonomous travel mode is permissible may be displayed as the image. The travel mode is automatic travel (autonomous travel mode), and the travel permissibility determination result on whether continuance of the last travel is permissible is "Travel permissible".

An area on road L blocked by vehicle 400 and included in the travel permitting condition for vehicle 200 is the current lane alone among the current lane and the opposite lane. Therefore, vehicle 200 cannot travel in the opposite lane to pass by vehicle 400.

Furthermore, since vehicle 400 is stationary ahead of vehicle 200, feasible operation determiner 131 determines, from this situation, that vehicle 200 overtakes vehicle 400. Feasible operation determiner 131 computes a route for overtaking. The route for overtaking includes the opposite lane. Thus, the location information at the time of overtaking includes the opposite lane as a travel area.

FIG. 7 illustrates, in (b), presentation unit 110 displaying an image showing the state where an alert and the deviated travel permitting condition are presented. FIG. 7 illustrates, in (b), the state after a predetermined length of time has elapsed while being stationary (stacked) in (a) in FIG. 7.

The image includes an indication that vehicle 400 is a cause of stoppage of vehicle 200 ("Road closed" in (b) in FIG. 7), the deviated travel permissibility condition ("Travel in opposite lane impermissible" in (b) in FIG. 7), the current travel mode ("Out of travel permitting conditions" in (b) in FIG. 7), the travel continuance permissibility determination result ("STOP" in (b) in FIG. 7), and a switching button for switching the travel mode (button 111 in (b) in FIG. 7). For example, the cause of stoppage, the deviated travel permitting conditions, the travel continuance permissibility determination result, and the like are displayed as alerts.

In this manner, the cause that made the automatic travel of vehicle 200 impermissible is displayed for remote operator H, allowing remote operator H to properly recognize the situation of vehicle 200. By merely looking at the image illustrated in (b) in FIG. 7, remote operator H can easily recognize the situation where vehicle 200 is stationary.

When remote operator H operates (for example, presses down) button 111, control signal switch instruction unit 133 causes presentation unit 110 to display a button (not illustrated in the drawings) for remote operator H to select the travel mode to be applied after switching, for example. Thus, it is sufficient that control signal switch instruction unit 133 determine whether switching over to the travel mode selected by remote operator H is permissible, meaning that the amount of processing in the determination can be reduced.

Note that when the switching button is provided as a hardware button, the switching button does not need to be presented on presentation unit 110.

FIG. 7 illustrates, in (c), an image after switching over to the accelerator manually controlled travel mode. Specifically, FIG. 7 illustrates, in (c), the state where remote operator H has selected the accelerator manually controlled travel mode and the travel in the accelerator manually controlled travel mode is permissible (Yes in S140), and the travel mode has been switched over to the accelerator manually controlled travel mode (S150). Note that in (c) in FIG. 7, traveling of vehicle 410 in the opposite lane is illustrated. Furthermore, in (c) in FIG. 7, dot shading indicates a surveillance area that needs to be monitored by remote operator H.

The surveillance area is, for example, an area around vehicle 200 that is to be monitored by remote operator H during travel in the accelerator manually controlled travel mode. The surveillance area to be monitored by remote operator H may be an area in which vehicle 200 itself cannot detect an object or is less reliable in detecting an object.

As illustrated in (c) in FIG. 7, presentation unit 110 displays auxiliary information regarding the travel of vehicle 200 and the surveillance area required to be monitored by remote operator H according to the switching over to the accelerator manually controlled travel mode. For example, presentation unit 110 displays the surveillance area and the auxiliary information by superimposition on the image obtained from vehicle 200. In this manner, the surveillance area required to be monitored according to the switching over to the accelerator manually controlled travel mode is displayed, allowing remote operator H to easily know an area where remote operator H needs to monitor.

Furthermore, presentation unit 110 may display the travel path (the dashed line indicated in (c) in FIG. 7), the current travel mode ("Accelerator manually controlled" indicated in (c) in FIG. 7), the travel continuance permissibility determination result ("Travel permissible" indicated in (c) in FIG. 7), and the like. This allows remote operator H to remotely operate vehicle 200 with reference to the auxiliary information. Furthermore, since vehicle 410 is present in the travel path, presentation unit 110 may display an alert for approaching vehicle 410 or information that calls attention, such as "Caution ahead", as an alert indicating that there is a risk of collision with vehicle 410. The information that calls attention is included in the auxiliary information. Note that the travel path is one example of the position of the vehicle on the driving route. In the example of (c) in FIG. 7, the position on the driving route includes the opposite lane.

Furthermore, in (c) in FIG. 7, as travel mode switching buttons, button 112 indicating "Normal travel" and button 113 indicating "Emergency stop" are displayed. The normal travel means traveling in the autonomous travel mode; when button 112 is operated, vehicle 200 is switched over to the autonomous travel mode and travels in the autonomous travel mode. In other words, when button 112 is operated, control signal switch instruction unit 133 switches the current accelerator manually controlled travel mode to the autonomous travel mode. Note that in the state illustrated in (c) in FIG. 7, the travel permitting condition in the autonomous travel mode is not satisfied (travel in the opposite lane impermissible), and therefore button 112 is disabled. Being disabled is, in other words, being in the state where an operation is invalidated. In this manner, the button for selecting a travel mode in which the travel permitting condition is not satisfied is controlled so that the button cannot be selected. In (c) in FIG. 7, button 112 that cannot be operated is illustrated by the dashed line.

For example, after remote operator H selects the accelerator manually controlled travel mode, control signal switch instruction unit 133 may determine, at predetermined time intervals, whether the travel permitting condition in the accelerator manually controlled travel mode is satisfied. For example, after remote operator H selects the accelerator manually controlled travel mode, control signal switch instruction unit 133 may determine, at predetermined time intervals, whether the travel permitting condition in the autonomous travel mode is satisfied.

The emergency stop is a button for urgently stopping vehicle 200; when button 113 is operated, an emergency stop of vehicle 200 is triggered. In other words, when control signal switcher 240 obtains a signal indicating that button 113 has been operated, control signal switcher 240 forces vehicle 200 to stop regardless of the current travel mode. For example, regardless of the instruction information from control signal switch instruction unit 133, control signal switcher 240 forces vehicle 200 to stop.

When the travel mode is switched over to the accelerator manually controlled travel mode and the travel in the accelerator manually controlled travel mode is started, remote operator H performs the parking brake operation and the accelerator operation as the control operation, and autonomous driving system 230 controls the brake operation, the steering wheel operation, and the presenting operation.

FIG. 7 illustrates, in (d), the state of traveling in the accelerator manually controlled travel mode. FIG. 7 illustrates, in (d), the state after overtaking vehicle 400 by traveling in the opposite lane in the accelerator manually controlled travel mode, starting from the state in (c) in FIG. 7.

As illustrated in (d) in FIG. 7, for example, when control signal switch instruction unit 133 determines that the travel permitting condition in the autonomous travel mode is satisfied as a result of vehicle 200 returning to the current lane after overtaking vehicle 400 in the accelerator manually controlled travel mode, button 112 is enabled. In (d) in FIG. 7, button 112 that can be operated is illustrated by the solid line.

For example, when remote operator H operates button 112, control signal switch instruction unit 133 switches the travel mode from the accelerator manually controlled travel mode to the autonomous travel mode. Specifically, control signal switch instruction unit 133 outputs, to control signal switcher 240, instruction information indicating an instruction to travel in the autonomous travel mode. When control signal switcher 240 obtains the instruction information, control signal switcher 240 outputs, to vehicle controller 250, the control signal received from autonomous driving system 230, to switch vehicle 200 over to the autonomous travel mode.

In this manner, when the travel of vehicle 200 in the autonomous travel mode is impermissible, remote operation device 130 can select the assigning travel mode to automate part of the vehicle operation, allowing for a reduced burden on remote operator H as compared to the case of switching over to the full remote operation mode. Furthermore, since remote operator H can limit, according to the state of communication, the state of the vehicle, the feasible operation, and the state of the surroundings of the vehicle, the vehicle functions that can be controlled by each of the autonomous driving function and remote operator H, safe travel of vehicle 200 can be ensured.

### [Variations of Embodiment]

The configuration of a vehicle control system according to the present variation will be described with reference to FIG. 8. FIG. 8 is a block diagram illustrating the functional configuration of a vehicle control system according to the present variation. The vehicle control system according to the present variation is different from vehicle control system 10 according to the embodiment mainly in that vehicle 200a includes remote operation edge module 260. Hereinafter, the vehicle control system according to the present variation will be described focusing on the points that differ from vehicle control system 10 according to the embodiment. Elements that are identical or similar to elements of vehicle control system 10 according to the embodiment share the same reference signs with vehicle control system 10 according to the embodiment, and description thereof will be omitted or simplified.

Note that in FIG. 8, among various structural elements included in the vehicle control system, only input/output system 100a, remote operation device 130, and vehicle 200a are illustrated.

As illustrated in FIG. 8, vehicle 200a according to the present variation does not include control signal switcher 240 of vehicle 200 according to the embodiment and includes remote operation edge module 260 and travel mode switcher 270.

Remote operation edge module 260 is, for example, a module provided to enable vehicle 200a, which is capable of autonomous driving, but does not include a function for performing the manually controlled remote driving based on the remote operation, to perform the autonomous driving and the manually controlled remote driving based on the remote operation. Remote operation edge module 260 may be attached later to vehicle 200a capable of autonomous driving, for example. Furthermore, remote operation edge module 260 can be connected to vehicle operation unit 120 and remote operation device 130 via the communication network so as to allow communication therebetween.

Remote operation edge module 260 includes auxiliary autonomous driving system 261 and control signal switcher 262.

Auxiliary autonomous driving system 261 performs processing for vehicle 200a to drive itself. Auxiliary autonomous driving system 261 creates an autonomous driving travel plan on the basis of the vehicle information and the like. The travel plan includes a travel path, a speed, and the like. Furthermore, in the case of traveling in the autonomous travel mode, in order to implement the created travel plan, auxiliary autonomous driving system 261 generates a control signal based on the travel plan and outputs the control signal to control signal switcher 262. Auxiliary autonomous driving system 261 is, for example, a system independent of autonomous driving system 230 and including functions similar to the functions of autonomous driving system 230.

Note that the travel plan created by auxiliary autonomous driving system 261 and the control signal generated by auxiliary autonomous driving system 261 may be the same as or different from the travel plan created by autonomous driving system 230 and the control signal generated by autonomous driving system 230.

Note that auxiliary autonomous driving system 261 may obtain the travel plan and the control signal from autonomous driving system 230, for example. Specifically, auxiliary autonomous driving system 261 may output, to control signal switcher 262, the control signal generated by autonomous driving system 230.

Control signal switcher 262 includes functions similar to the functions of control signal switcher 240 according to the embodiment. Control signal switcher 262 outputs, to travel mode switcher 270, a control signal for achieving the travel corresponding to the travel mode determined by control signal switch instruction unit 133. In the case of traveling in the full remote operation mode included in the remote operation mode, control signal switcher 262 outputs, to travel mode switcher 270, the control signal received from vehicle operation unit 120. Furthermore, in the case of traveling in the assigning travel mode included in the remote operation mode, control signal switcher 262 extracts necessary information from each of the control signal received from vehicle operation unit 120 and the control signal received from auxiliary autonomous driving system 261, and outputs the extracted information to travel mode switcher 270. In the case of traveling in the accelerator manually controlled travel mode, control signal switcher 262 extracts information of elements different from the accelerator and the parking brake from the control signal received from auxiliary autonomous driving system 261, extracts information regarding the accelerator and the parking brake from the control signal received from vehicle operation unit 120, and outputs the extracted information to travel mode switcher 270 as the control signal.

Furthermore, when control signal switcher 262 obtains, from control signal switch instruction unit 133, instruction information indicating switching to the remote operation mode, control signal switcher 262 may output the instruction information to travel mode switcher 270.

On the basis of the travel mode determined by control signal switch instruction unit 133, that is, on the basis of the instruction information, travel mode switcher 270 outputs, to vehicle controller 250, the control signal received from one of autonomous driving system 230 and remote operation edge module 260. In other words, according to whether the travel mode is the autonomous travel mode or the remote operation mode, travel mode switcher 270 switches the control signal to be output to vehicle controller 250. The remote operation mode includes one assigning travel mode or the full remote operation mode.

When control signal switch instruction unit 133 determines the travel mode to be the autonomous travel mode, travel mode switcher 270 outputs, to vehicle controller 250, the control signal received from autonomous driving system 230. At this time, travel mode switcher 270 does not output, to vehicle controller 250, the control signal received from remote operation edge module 260. When control signal switch instruction unit 133 determines the travel mode to be the remote operation mode, travel mode switcher 270 outputs, to vehicle controller 250, the control signal received from remote operation edge module 260. At this time, travel mode switcher 270 does not output, to vehicle controller 250, the control signal received from autonomous driving system 230.

Thus, even when vehicle 200a does not include the function for switching the travel mode to the remote operation mode, merely attaching remote operation edge module 260 allows vehicle 200a to switch over to the remote operation mode determined by remote operation device 130.

### [Other Embodiments]

The present disclosure has been described based on the embodiment and the variation (hereinafter also referred to as the embodiment, etc.), but the present disclosure is not limited to the embodiments, etc., described above. Forms obtained by various modifications to the present embodiment, etc., that can be conceived by a person having ordinary skill in the art, and forms configured by combining structural elements in different embodiments, etc., so long as these do not depart from the teachings of the present disclosure, may be included in the scope of one or more aspects of the present disclosure.

For example, the above embodiment, etc., has described an example in which the control signal switch instruction unit determines a travel mode on the basis of at least the communication information. The control signal switch instruction unit may determine a travel mode without using the communication information. It is sufficient that the control signal switch instruction unit determine a travel mode on the basis of at least one of the communication information, the state of sensing, the location information, the travel information, the environmental information, and the travel task information. Thus, even in the case where the burden the remote operation imposes on the remote operator increases due to one of the state of sensing around the mobile body, the position of the mobile body, the state of traveling of the mobile body, the state of surroundings of a vehicle, which is the mobile body, and the travel task for the mobile body, it is possible to reduce the burden on the remote operator and also ensure safety with the whole system through proper assignment of the vehicle control based on the autonomous driving function and the vehicle control based on the remote operator depending on various situations mentioned above. Note that each of the communication information, the state of sensing, the location information, the travel information, the environmental information, and the travel task information is one example of the information regarding the mobile body.

Furthermore, the above embodiment, etc., has described an example in which three travel modes, namely, the accelerator manually controlled travel mode, the brake manually controlled travel mode, and the steering wheel manually controlled travel mode, are included as the assigning travel mode, but the travel mode is not limited to this example. For example, instead of or in addition to those three travel modes, a mode in which sound or speech is output from the mobile body to the surroundings or a mode in which the autonomous travel continues after close scrutiny by the remote operator (for approaching pedestrians, approaching vehicles, and approaching bicycles) may be included; it is possible to switch to these modes depending on the burden the remote operation imposes on the remote operator.

Furthermore, in the above embodiment, etc., the assigning travel mode is implemented through one of the two options, namely, the vehicle control based on the autonomous driving function of the vehicle and the vehicle control based on the remote operator, but the assigning travel mode may be implemented through one of three options, namely, the vehicle control based on the autonomous driving function of the vehicle, the vehicle control based on the remote operator, and vehicle control based on a command generated by the remote operation device.

Furthermore, the above embodiment, etc., has described an example in which the communication state measurement unit measures the state of the communication, but this is not limiting. The communication state measurement unit may obtain information indicating the state of communication in a communication network from an external device connected to the communication network so as to allow communication therebetween, for example.

Furthermore, the above embodiment, etc., has described an example in which the surveillance area is displayed on the presentation unit, as illustrated in (c) in FIG. 7, but the surveillance area need not be displayed.

Furthermore, the above embodiment, etc., has described an example in which the presentation unit presents a top-down image, but this is not limiting. The presentation unit may present 360-degree video or may present third party perspective video by recombining video, for example. Furthermore, the presentation unit may present information (obstacle information) of an object detected by a sensor (for example, an objection detection sensor) installed in the vehicle. The object information includes at least one of the position, size, speed, etc., of the object.

Furthermore, the above embodiment, etc., has indicated determining "No" in Step S30 as one example of switching from autonomous driving to manually controlled remote driving, but this is not limiting; this may be performing, by the remote operator, an operation to switch from autonomous driving to manually controlled remote driving.

Furthermore, the order of the processes described in the above embodiment, etc., is merely one example. The order of the processes may be changed, and the processes may be performed in parallel. A part of the processes does not need to be performed.

Furthermore, the structural elements described in the above embodiment, etc., may each be provided in the form of software or may be typically provided in the form of large-scale integration (LSI), which is an integrated circuit. These may be made as individual chips or as a single chip to include a part or all thereof. Although LSI is mentioned here, there are instances where the integrated circuit is called IC, system LSI, super LSI, and ultra LSI, depending on the level of integration. Furthermore, the method of circuit integration is not limited to LSI, and implementation through a dedicated circuit or a general-purpose processor is also possible. A field programmable gate array (FPGA) which allows programming after LSI manufacturing or a reconfigurable processor which allows reconfiguration of the connections and settings of the circuit cells inside the LSI may also be used. In addition, depending on the emergence of circuit integration technology that replaces LSI due to progress in semiconductor technology or other derivative technology, it is obvious that such technology may be used to integrate the structural elements.

Furthermore, the separation of the function blocks in the block diagrams is merely one example, and two or more function blocks may be implemented as a single function block, a single function block may be separated into two or more function blocks, or part of the functions of a function block may be transferred to another function block. Moreover, the functions of function blocks having similar functions may be processed, in parallel or by time-division, by a single hardware or software product.

Furthermore, the remote operation device included in the vehicle control system may be provided as a single device or may be provided as two or more devices. For example, the processors of the remote operation device may be provided in at least two devices. For example, the functions of at least one processor of the remote operation device may be provided using a device installed in the vehicle. When the remote operation device is provided as two or more devices, the structural elements included in the remote operation device may be allocated to the two or more devices in any way. Moreover, the method for communication between the two or more devices is not particularly limited.

Furthermore, the above embodiment, etc., has described an example in which the remote operation edge module is installed in the vehicle, but this is not limiting. The remote operation edge module may be provided in the remote operation device, for example.

Moreover, the techniques disclosed herein may be the aforementioned program, and may be a non-transitory computer-readable recording medium having the aforementioned program recorded thereon. Furthermore, it goes without saying that the program can be circulated over a transmission medium such as the Internet. For example, the program or the digital signal of the program may be transmitted via an electrical communication line, a wireless or wired communication line, a network represented by the Internet, data broadcasting, or the like. Moreover, by transferring the recording medium having the program or the digital signal of the program or by transferring the program or the digital signal via the network or the like, the present disclosure may be implemented by a different independent computer system.

Furthermore, in the above embodiment, etc., the structural elements may be configured using dedicated hardware or may be implemented by executing software programs suited to the respective structural elements. The respective structural elements may be implemented through the reading and execution of a software program recorded on a recording medium such as a hard disk or semiconductor memory by a program execution unit such as a central processing unit (CPU) or a processor.

### [Industrial Applicability]

The present disclosure can be widely used for systems for operating a mobile body capable of traveling in the autonomous travel mode and the remote operation mode.

### [Reference Signs List]

- 10: vehicle control system (information processing system)
- 100: remote operation system
- 100a: input/output system
- 110: presentation unit
- 111, 112, 113: button
- 120: vehicle operation unit
- 130: remote operation device
- 131: feasible operation determiner
- 132: travel continuance permissibility determiner
- 133: control signal switch instruction unit
- 134: communication state measurement unit
- 200, 200a, 400, 410: vehicle
- 210: environmental information obtainer
- 220: vehicle information obtainer
- 230: autonomous driving system
- 240, 262: control signal switcher
- 250: vehicle controller
- 260: remote operation edge module
- 261: auxiliary autonomous driving system
- 270: travel mode switcher
- 300: network
- 310: wireless base station
- H: remote operator
- L: road

## Claims

1. An information processing method for causing a computer to execute:
obtaining communication information regarding a state of a mobile body capable of autonomous driving and manually controlled remote driving;
determining a first operation control based on information regarding the state of the mobile body when the mobile body is switched from the autonomous driving to the manually controlled remote driving, the first operation control being included in operation control of the mobile body and involving a manually controlled remote operation; and
causing the mobile body to operate based on the manually controlled remote operation corresponding to the first operation control, and causing the mobile body to perform a second operation control different from the first operation control.

2. The information processing method according to claim 1, wherein
the information regarding the state of the mobile body is communication information indicating a state of communication between the mobile body and a remote operation device for operating the mobile body from a remote location via the communication.

3. The information processing method according to claim 2, wherein
in the determining of the first operation control, the first operation control is determined based on an association between the state of communication and the operation control of the mobile body for which the manually controlled remote operation is permitted.

4. The information processing method according to claim 3, wherein
in the determining of the first operation control, the first operation control in which the manually controlled remote operation permitted includes more processes, becomes more complex, or becomes more advanced as the state of communication improves is determined.

5. The information processing method according to any one of claims 2 to 4, wherein
the state of communication includes a state of a communication delay or a communication band in the communication between the mobile body and the remote operation device.

6. The information processing method according to any one of claims 2 to 5, further comprising:
obtaining sensing information indicating a state of sensing around the mobile body; and
determining the first operation control based on the communication information and the sensing information.

7. The information processing method according to claim 6, wherein
in the determining of the first operation control, based on an association between (i) the state of communication and the state of sensing and (ii) the operation control of the mobile body for which the manually controlled remote operation is permitted, the first operation control in which the manually controlled remote operation permitted includes more processes, becomes more complex, or becomes more advanced as the state of sensing improves is determined.

8. The information processing method according to claim 7, wherein
the state of sensing includes a processing delay or a loss of image data, sound data, or point group data.

9. The information processing method according to any one of claims 2 to 8, further comprising:
obtaining location information indicating a location of the mobile body; and
determining the first operation control based on the communication information and the location information.

10. The information processing method according to claim 9, wherein
in the determining of the first operation control, based on an association between (i) the state of communication and the location of the mobile body and (ii) the operation control of the mobile body for which the manually controlled remote operation is permitted, the first operation control in which the manually controlled remote operation permitted includes more processes, becomes more complex, or becomes more advanced as a level of safety of the mobile body in the autonomous driving at the location of the mobile body decreases is determined.

11. The information processing method according to claim 10, wherein
the location of the mobile body includes one of a position of the mobile body and a position on a travel route for the mobile body.

12. The information processing method according to any one of claims 2 to 11, further comprising:
obtaining movement state information indicating a state of movement of the mobile body; and
determining the first operation control based on the communication information and the movement state information.

13. The information processing method according to claim 12, wherein
in the determining of the first operation control, based on an association between (i) the state of communication and the state of movement of the mobile body and (ii) the operation control of the mobile body for which the manually controlled remote operation is permitted, the first operation control in which the manually controlled remote operation permitted includes more processes, becomes more complex, or becomes more advanced as a level of safety of the mobile body in the state of movement of the mobile body increases is determined.

14. The information processing method according to claim 13, wherein
the state of movement of the mobile body includes a speed of the mobile body.

15. The information processing method according to any one of claims 2 to 14, further comprising:
obtaining environmental information indicating a surrounding environment for the mobile body; and
determining the first operation control based on the communication information and the environmental information.

16. The information processing method according to claim 15, wherein
in the determining of the first operation control, based on an association between (i) the state of communication and the surrounding environment for the mobile body and (ii) the operation control of the mobile body for which the manually controlled remote operation is permitted, the first operation control in which the manually controlled remote operation permitted includes more processes, becomes more complex, or becomes more advanced as a level of safety of the mobile body in the autonomous driving in the surrounding environment for the mobile body decreases is determined.

17. The information processing method according to claim 16, wherein
the surrounding environment for the mobile body includes one of a state of an obstacle, a state of a road surface, and weather.

18. The information processing method according to any one of claims 2 to 17, further comprising:
obtaining movement task information indicating a movement task for movement of the mobile body; and
determining the first operation control based on the communication information and the movement task information.

19. The information processing method according to claim 18, wherein
in the determining of the first operation control, based on an association between (i) the state of communication and the movement task and (ii) the operation control of the mobile body for which the manually controlled remote operation is permitted, the first operation control in which the manually controlled remote operation permitted includes more processes, becomes more complex, or becomes more advanced as a level of complexity of the movement task increases is determined.

20. The information processing method according to claim 19, wherein
the movement task includes one of proceeding straight, turning right or left, avoiding parking on a road, reversing, and pulling over.

21. An information processing system comprising:
an obtainer that obtains information regarding a state of a mobile body capable of autonomous driving and manually controlled remote driving;
a determiner that determines a first operation control based on the information regarding the state of the mobile body when the mobile body is switched from the autonomous driving to the manually controlled remote driving, the first operation control being included in operation control of the mobile body and involving a manually controlled remote operation; and
a switch instruction unit that causes the mobile body to operate based on the manually controlled remote operation corresponding to the first operation control, and causes the mobile body to perform a second operation control different from the first operation control.
